# EUROPÄISCHE PATENTSCHRIFT

(11) **EP 2 373 668 B1**
(45) Veröffentlichungstag und Bekanntmachung des Hinweises auf die Patenterteilung: **11.09.2013**
(21) Anmeldenummer: 09778837.6
(22) Anmeldetag: 06.10.2009
(51) Int. Cl.: C07F 9/30, C07F 9/48, C08K 5/53, C09K 21/12

(54) **VERFAHREN ZUR HERSTELLUNG VON MONO-HYDROXYFUNKTIONALISIERTEN DIALKYLPHOSPHINSÄUREN, -ESTERN UND -SALZEN MITTELS VINYLESTER EINER CARBONSÄURE UND IHRE VERWENDUNG**
METHOD FOR PRODUCING MONO-HYDROXY-FUNCTIONALIZED DIALKYLPHOSPHINIC ACIDS, ESTERS AND SALTS USING A VINYL ESTER OF A CARBOXYLIC ACID AND THE USE THEREOF
PROCÉDÉ DE PRODUCTION D'ACIDES DIALKYLPHOSPHINIQUES À FONCTIONNALISATION MONOHYDROXY, DE LEURS ESTERS ET DE LEURS SELS À L'AIDE DE VINYLESTERS D'UN ACIDE CARBOXYLIQUE ET LEUR UTILISATION

(30) Priorität: 02.12.2008 DE 102008060035
(43) Veröffentlichungstag der Anmeldung: 12.10.2011
(73) Patentinhaber: Clariant Finance (BVI) Limited, Road Town, Tortola (VG)
(72) Erfinder: HILL, Michael, 50827 Köln (DE); KRAUSE, Werner, 50354 Hürth (DE); SICKEN, Martin, 51149 Köln (DE)
(74) Vertreter: Paczkowski, Marcus
(86) Internationale Anmeldenummer: PCT/EP2009/007137
(87) Internationale Veröffentlichungsnummer: WO 2010/063343

(56) Entgegenhaltungen:
- EP-A1- 1 832 596
- EP-A1- 1 905 776
- EP-A2- 0 319 482
- WO-A1-01/42252
- WO-A1-2010/051884
- US-A- 5 190 934
- US-A1- 2002 187 977
- MONTCHAMP J L: "Recent advances in phosphorus-carbon bond formation: synthesis of H-phosphinic acid derivatives from hypophosphorous compounds" JOURNAL OF ORGANOMETALLIC CHEMISTRY, ELSEVIER-SEQUOIA S.A. LAUSANNE, CH, Bd. 690, Nr. 10, 16. Mai 2005 (2005-05-16) , Seiten 2388-2406, XP004877374 ISSN: 0022-328X
- SYLVINE DEPRÈLE ET AL: "Palladium-Catalyzed Hydrophosphinylation of Alkenes and Alkynes" JOURNAL OF THE AMERICAN CHEMICAL SOCIETY, AMERICAN CHEMICAL SOCIETY, WASHINGTON, DC. US, Bd. 124, Nr. 32, 1. Januar 2002 (2002-01-01), Seite 9387, XP002500862 ISSN: 0002-7863
- BRAVO-ALTAMIRANO ET AL: "A novel approach to phosphonic acids from hypophosphorous acid" TETRAHEDRON LETTERS, ELSEVIER, AMSTERDAM, NL, Bd. 48, Nr. 33, 19. Juli 2007 (2007-07-19) , Seiten 5755-5759, XP022163552 ISSN: 0040-4039
- SYLVINE DEPRÈLE ET AL: "Environmentally Benign Synthesis of H-Phosphinic Acids Using a Water-Tolerant, Recyclable Polymer-Supported Catalyst" ORGANIC LETTERS, AMERICAN CHEMICAL SOCIETY, US, Bd. 6, Nr. 21, 1. Januar 2004 (2004-01-01) , Seiten 3805-3808, XP002500861 ISSN: 1523-7060 [gefunden am 2004-09-18]
- PATRICE RIBIÈRE ET AL: "NiCl2-Catalyzed Hydrophosphinylation" JOURNAL OF ORGANIC CHEMISTRY, AMERICAN CHEMICAL SOCIETY, EASTON.; US, Bd. 70, Nr. 10, 1. Januar 2005 (2005-01-01), Seiten 4064-4072, XP002530191 ISSN: 0022-3263
- FROESTL W ET AL: "PHOSPHINIC ACID ANALOGUES OF GABA. 2. SELECTIVE, ORALLY ACTIVE GABAB ANTAGONISTS" JOURNAL OF MEDICINAL CHEMISTRY, AMERICAN CHEMICAL SOCIETY, WASHINGTON, US, Nr. 17, 1. Januar 1995 (1995-01-01), Seiten 3313-3331, XP000999491 ISSN: 0022-2623
- PIOTR MAJEWSKI: "A New Method for the Preparation of Bis(1-hydroxyalkyl)-phosphinic Acids" SYTHESIS,, Bd. 6, 1. Januar 1987 (1987-01-01), Seiten 555-557, XP002558292
- YAMAGISHI T ET AL: "Diastereoselective synthesis of beta-substituted alpha-hydroxyphosphinates through hydrophosphinylation of alpha-heteroatom-substituted aldehydes" TETRAHEDRON, ELSEVIER SCIENCE PUBLISHERS, AMSTERDAM, NL, Bd. 59, Nr. 6, 3. Februar 2003 (2003-02-03), Seiten 767-772, XP004404933 ISSN: 0040-4020
- DATABASE BEILSTEIN BEILSTEIN INSTITUTE FOR ORGANIC CHEMISTRY, FRANKFURT-MAIN, DE; 1956, XP002567148 Database accession no. reaction ID 101395 & PUDOWIK ET AL.: ZHURNAL OBSHCHEI KHIMII, Bd. 26, 1956,

## Beschreibung

Die Erfindung betrifft ein Verfahren zur Herstellung von mono-hydroxyfunktionalisierten Dialkylphosphinsäuren, -estern und -salzen mittels Vinylester einer Carbonsäure und ihre Verwendung.

Dialkylphosphinsäuren sind Gegenstand verschiedener Abhandlungen, so beschreibt J.L. Montchamp in Journal of Organometallic Chemistry, Bd. 690, Nr. 10, 16.05.2005, Seiten 2388 - 2406 die Synthese von Phosphinsäurederivaten, ausgehend von hypophosphorigen Verbindungen. Dabei werden - Palladium-katalysiert - in einem flüssigen System Olefine mit mindestens 8 C-Atomen an die hypophosphorige Verbindung addiiert.

Ähnlich wird nach S. Depréle et al., J. Am. Chem. Soc., Bd. 124, Nr. 32, 01.01.2002, Seite 9387, hypophosphorige Säure in wässriger Form mit Olefinen, die mindestens 8 C-Atome aufweisen oder mit Alkinen, die ebenfalls mindestens 8 C-Atome aufweisen zu den entsprechenden P-Verbindungen, die dann ebenfalls mindestens 8 C-Atome enthalten, umgesetzt.

In Tetrahedron Lett., Bd. 48, Nr. 33, 19.07.2007, Seiten 5755 - 5759 (Bravo-Altamirano et al.) wird die Palladium-katalysierte Herstellung von allylgruppenhaltigen Phosphinsäuren beschrieben, bei dem Alkine bzw. Alkene mit mehr als 7 C-Atomen mit phosphoriger Säure umgesetzt werden.

Die Reaktion von ausschließlich hypophosphoriger Säure in flüssiger Form mit Kohlenstoffverbindungen, die mindestens 8 C-Atome aufweisen und eine C = C-oder C ≡ C-Verbindung enthalten, wird durch S. Depréle et al., in Org. Lett., Bd. 6, Nr. 21, 01.01.2004, Seiten 3805 - 3808 beschrieben. Erhalten werden P-Verbindungen, die eine Alkylgruppe mit mindestens 8 C-Atomen aufweisen.

P. Ribière et al., J. Org. Chem., Bd. 70, Nr. 10, 01.01.2005, Seiten 4064 - 4072 beschreiben die Nickel-katalysierte Hydrophosphorylierung von Phosphinsäuren mit verschiedenen Olefinen, insbesondere mit 1-Octen sowie die Synthese von Alkenyl-H-Phosphinaten, die eine C = C-Bindung aufweisen.

W. Froestl et al. beschreiben in J. of Med. Chem., Am. Chem. Soc., Nr. 17 vom 01.01.1995 auf den Seiten 3313 - 3331 die pharmakologischen Eigenschaften von substituierten 3-Aminopropylphosphinsäuren.

Bisher fehlt es an Verfahren zur Herstellung von mono-hydroxyfunktionalisierten Dialkylphosphinsäuren, -estern und -salzen, die wirtschaftlich und großtechnisch zugänglich sind und die insbesondere eine hohe Raum-/Zeitausbeute ermöglichen. Auch fehlt es an Verfahren, die ohne störende Halogenverbindungen als Edukte ausreichend effektiv sind und an solchen, bei denen die Endprodukte leicht erhalten bzw. isoliert werden können oder auch unter gezielten Reaktionsbedingungen (wie etwa einer Umesterung) gezielt und gewünscht hergestellt werden können.

Diese Aufgabe wird gelöst durch ein Verfahren zur Herstellung von zur Herstellung von mono-hydroxyfunktionalisierten Dialkylphosphinsäuren, -estern und -salzen, dadurch gekennzeichnet, dass man
a) eine Phosphinsäurequelle (I) 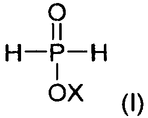 mit Olefinen (IV) 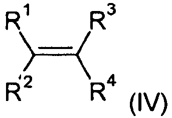 in Gegenwart eines Katalysators A zu einer Alkylphosphonigsäure, deren Salz oder Ester (II) 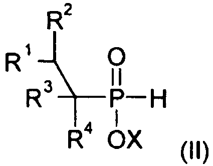 umsetzt,
b) die so entstandene Alkylphosphonigsäure, deren Salz oder Ester (II) mit einem Vinylester einer Carbonsäure (V) 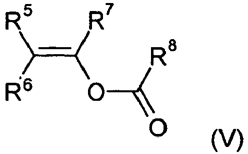 in Gegenwart eines Katalysators B zum mono-funktionalisierten Dialkylphosphinsäurederivat (VI) umsetzt und 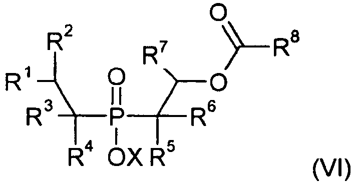
c) das mono-funktionalisierten Dialkylphosphinsäurederivat (VI) in Gegenwart eines Katalysators C zum mono-hydroxyfunktionalisierten Dialkylphosphinsäurederivat (III) 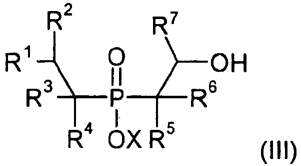 umsetzt oder die nach Schritt a) erhaltene Alkylphosphonigsäure, deren Salz oder Ester (II) und/oder die nach Schritt b) erhaltene mono-funktionalisierte Dialkylphosphinsäure, deren Salz oder Ester (VI) und/oder die nach Schritt c) erhaltene mono-hydroxyfunktionalisierte Dialkylphosphinsäure, deren Salz oder Ester (III) und/oder die jeweils resultierende Reaktionslösung davon mit einem Alkylenoxid oder einem Alkohol M-OH und/oder M'-OH verestert, und den jeweils entstandenen Alkylphosphonigsäureester (II), mono-funktionalisierten Dialkylphosphinsäurester (VI) und/oder mono-hydroxyfunktionalisierten Dialkylphosphinsäureester (III) den weiteren Reaktionsschritten b) oder c) unterwirft, wobei R¹, R², R³, R⁴, R⁵, R⁶, R⁷, R⁸ gleich oder verschieden sind und unabhängig voneinander H, C₁-C₁₈-Alkyl, C₆-C₁₈-Aryl, C₆-C₁₈-Aralkyl, C₆-C₁₈-Alkyl-Aryl, CN, CHO, OC(O)CH₂CN, CH(OH)C₂H₅, CH₂CH(OH)CH₃, 9-Anthracen, 2-Pyrrolidon, (CH₂)ₘOH, (CH₂)ₘNH₂, (CH₂)ₘNCS, (CH₂)ₘNC(S)NH₂, (CH₂)ₘSH, (CH₂)ₘS-2-thiazolin, (CH₂)ₘSiMe₃, C(O)R⁹, CH=CHR⁹ und/oder CH=CH-C(O)R⁹ bedeuten, die Gruppen C₆-C₁₈-Aryl, C₆-C₁₈-Aralkyl und C₆-C₁₈-Alkyl-Aryl mit C(O)CH₃, OH, CH₂OH, NH₂, NO₂, OCH₃, SH und/oder OC(O)CH₃ substituiert sein können und wobei R⁹ für C₁-C₈-Alkyl oder C₆-C₁₈-Aryl steht und m eine ganze Zahl von 0 bis 10 bedeutet und X für H, C₁-C₁₈-Alkyl, C₆-C₁₈-Aryl, C₆-C₁₈-Aralkyl, C₆-C₁₈-Alkyl-Aryl, (CH₂)ₖOH, CH₂-CHOH-CH₂OH, (CH₂)ₖO(CH₂)ₖH, (CH₂)ₖ-CH(OH)-(CH₂)ₖH, (CH₂-CH₂O)ₖH, (CH₂-C[CH_{3]}HO)ₖH, (CH₂-C[CH₃]HO)ₖ(CH₂-CH₂O)ₖH, (CH₂-CH₂O)ₖ(CH₂-C[CH₃]HO)H, (CH₂-CH₂O)ₖ-alkyl, (CH₂-C[CH₃]HO)ₖ-alkyl, (CH₂-C[CH₃]HO)ₖ(CH₂-CH₂O)ₖ-alkyl, (CH₂-CH₂O)ₖ(CH₂-C[CH₃]HO)O-alkyl, (CH₂)ₖ-CH=CH(CH₂)ₖH, (CH₂)ₖNH₂ und/oder (CH₂)ₖN[(CH₂)ₖH]₂ steht, wobei k eine ganze Zahl von 0 bis 10 bedeutet und/oder für Mg, Ca, Al, Sb, Sn, Ge, Ti, Fe, Zr, Zn, Ce, Bi, Sr, Mn, Cu, Ni, Li, Na, K, H und/oder eine protonierte Stickstoffbase stehen und es sich bei dem Katalysator A um Übergangsmetalle und/oder Übergangsmetallverbindungen und/oder Katalysatorsysteme handelt, die sich aus einem Übergangsmetall und/oder einer Übergangsmetallverbindung und mindestens einem Liganden zusammensetzen und es sich bei dem Katalysator B um Peroxide bildende Verbindungen und/oder Peroxoverbindungen und/oder um Azo-Verbindungen und es sich bei dem Katalysator C um eine Säure oder eine Base handelt.

Bevorzugt wird die nach Schritt c) erhaltene mono-hydroxyfunktionalisierte Dialkylphosphinsäure, deren Salz oder Ester (III) anschließend in einem Schritt d) mit Metallverbindungen von Mg, Ca, Al, Sb, Sn, Ge, Ti, Fe, Zr, Zn, Ce, Bi, Sr, Mn, Li, Na, K und/oder einer protonierte Stickstoffbase zu den entsprechenden mono-hydroxyfunktionalisierten Dialkylphosphinsäuresalzen (III) dieser Metalle und/oder einer Stickstoffverbindung umgesetzt.

Bevorzugt sind R¹, R², R³, R⁴, R⁵, R⁶, R⁷, R⁸ gleich oder verschieden und bedeuten, unabhängig voneinander H, Methyl, Ethyl, n-Propyl, Isopropyl, n-Butyl, Isobutyl, tert. Butyl und/oder Phenyl.

Bevorzugt ist X H, Ca, Mg, Al, Zn, Ti, Fe, Ce, Methyl, Ethyl, n-Propyl, Isopropyl, n-Butyl, Isobutyl, tert.-Butyl, Phenyl, Ethylenglykol, Propylglykol, Butylglykol, Pentylglykol, Hexylglykol, Allyl und/oder Glycerin.

Bevorzugt handelt es sich bei den Übergangsmetallen und/oder Übergangsmetallverbindungen um solche aus der siebten und achten Nebengruppe.

Bevorzugt handelt es sich bei den Übergangsmetallen und/oder Übergangsmetallverbindungen um Rhodium, Nickel, Palladium, Platin, Ruthenium.

Bevorzugt handelt es sich bei dem Katalysator B um Wasserstoffperoxid, Natriumperoxid, Lithiumperoxid, Kaliumpersulfat, Natriumpersulfat, Ammoniumpersulfat, Natriumperoxodisulfat, Kaliumperoxoborat, Peressigsäure, Benzoylperoxid, Di-t-butylperoxid und/oder Peroxodischwefelsäure und/oder um Azodiisobutyronitril, 2,2'-Azobis(2-amidinopropan)-dihydrochlorid und/oder 2,2'-Azobis(N,N'-dimethylen-isobutyramidin)-dihydrochlorid.

Bevorzugt handelt es sich bei dem Katalysator C um Metalle, Metallhydride, Metallhydroxide und Metallalkoholate und Mineralsäuren, beispielsweise Schwefel-, Salpeter-, Salz,- Phosphorsäure oder Mischungen davon.

Bevorzugt handelt es sich bei den Vinylester einer Carbonsäure (V) um ein Vinyl-, 1-Propenyl-, 1-Butenyl-acetat, -propionat, -butyrat, -pivalat, -benzoat, -cinnamat, -stearat, -laurat.

Bevorzugt handelt es bei dem Alkohol der allgemeinen Formel M-OH um lineare oder verzweigte, gesättigte und ungesättigte, einwertige organische Alkohole mit einer Kohlenstoffkettenlänge von C₁-C₁₈ und bei dem Alkohol der allgemeinen Formel M'-OH um lineare oder verzweigte, gesättigte und ungesättigte, mehrwertige organische Alkohole mit einer Kohlenstoffkettenlänge von C₁-C₁₈.

Die Erfindung betrifft auch die Herstellung von mono-hydroxyfunktionalisierten Dialkylphosphinsäuren, -estern und -salzen (III), hergestellt nach einem oder mehreren der Ansprüche 1 bis 10 und die anschließende Verwendung dieser Produkte als Zwischenprodukt für weitere Synthesen, als Binder, als Vernetzer bzw. Beschleuniger beim Aushärten von Epoxyharzen, Polyurethanen und ungesättigten Polyesterharzen, als Polymerstabilisatoren, als Pflanzenschutzmittel, als Sequestrierungsmittel, als Mineralöl-Additiv, als Korrosionsschutzmittel, in Wasch- und Reinigungsmittelanwendungen.

Die Erfindung betrifft ebenfalls die Herstellung von mono-hydroxyfunktionalisierten Dialkylphosphinsäuren, -salzen und -estern, hergestellt nach einem oder mehreren der Ansprüche 1 bis 10 und die anschließende Verwendung dieser Produkte als Flammschutzmittel, insbesondere als Flammschutzmittel für Klarlacke und Intumeszenzbeschichtungen, als Flammschutzmittel für Holz und andere cellulosehaltige Produkte, als reaktives und/oder nicht reaktives Flammschutzmittel für Polymere, zur Herstellung von flammgeschützten Polymerformmassen, zur Herstellung von flammgeschützten Polymerformkörpern und/oder zum flammhemmend Ausrüsten von Polyester und Cellulose-Rein- und Mischgeweben durch Imprägnierung.

Die Erfindung betrifft zudem die Herstellung von mono-hydroxyfunktionalisierten Dialkylphosphinsäuren, -salzen und -estern nach einem oder mehreren der Ansprüche 1 bis 10 und anschließende Verwendung dieser Produkte in flammgeschützten thermoplastischen oder duroplastischen Polymerformmassen, welche 0,5 bis 45 Gew.-% mono-hydroxyfunktionalisierte Dialkylphosphinsäuren,-salze oder -ester, die nach einem oder mehreren der Ansprüche 1 bis 10 hergestellt wurden, 0,5 bis 95 Gew.-% thermoplastisches oder duroplastisches Polymer oder Mischungen derselben, 0 bis 55 Gew.-% Additive und 0 bis 55 Gew.-% Füllstoff bzw. Verstärkungsmaterialien, wobei die Summe der Komponenten 100 Gew.-% beträgt, enthalten.

Schließlich betrifft die Erfindung die Herstellung von mono-hydroxyfunktionalisierten Dialkylphosphinsäuren, -salzen und -estern nach einem oder mehreren der Ansprüche 1 bis 10 und anschließende Verwendung dieser Produkte in flammgeschützten thermoplastischen oder duroplastischen Polymer-Formkörpern, -Filmen, -Fäden und -Fasern, enthaltend 0,5 bis 45 Gew.-% mono-hydroxyfunk-tionalisierte Dialkylphosphinsäuren, -salze oder -ester (III), die nach einem oder mehreren der Ansprüche 1 bis 10 hergestellt wurden, 0,5 bis 95 Gew.-% thermoplastisches oder duroplastisches Polymer oder Mischungen derselben, 0 bis 55 Gew.-% Additive und 0 bis 55 Gew.-% Füllstoff bzw. Verstärkungsmaterialien, wobei die Summe der Komponenten 100 Gew.-% beträgt, enthalten.

Alle vorgenannten Umsetzungen können auch stufenweise ausgeführt werden; ebenso können in den verschiedenen Verfahrensschritten auch die jeweiligen resultierenden Reaktionslösungen eingesetzt werden.

Bevorzugt handelt es sich bei der mono-hydroxyfunktionalisierten Dialkylphosphinsäure um 2-(Ethylhydroxyphosphinyl)-1-hydroxyethan, 2-(Propylhydroxyphosphinyl)-1-hydroxyethan, 2-(i-Propylhydroxyphosphinyl)-1-hydroxyethan, 2-(Butylhydroxyphos-phinyl)-1-hydroxyethan, 2-(sec-Butylhydroxy-phosphinyl)-1-hydroxyethan, 2-(i-Butyl-hydroxy-phosphinyl)-1-hydroxyethan, 2-(2-Phenylethylhydroxyphosphinyl)-1-hydroxy-ethan, 2-(Ethylhydroxyphosphinyl)-1-methyl-1-hydroxyethan, 2-(Propylhydroxyphos-phinyl)-1-methyl-1-hydroxyethan, 2-(i-Propylhydroxyphosphinyl)-1-methyl-1-hydroxy-ethan, 2-(Butylhydroxyphosphinyl)-1-methyl-1-hydroxyethan, 2-(sec-Butylhydroxy-phosphinyl)-1-methyl-1-hydroxyethan, 2-(i-Butylhydroxy-phosphinyl)-1-methyl-1-hydroxyethan und/oder 2-(2-Phenylethylhydroxyphosphinyl)-1-methyl-1-hydroxyethan.

Bevorzugt handelt es sich bei dem mono-hydroxyfunktionalisierten Dialkylphosphinsäureester um Methyl-, Ethyl-; i-Propyl-; Butyl-; Phenyl-, 2-Hydroxyethyl-, 2-Hydroxypropyl-, 3-Hydroxypropyl-, 4-Hydroxybutyl- und/oder 2,3-Dihydroxypropylester der vorgenannten mono-hydroxyfunktionalisierten Dialkylphosphinsäuren.

Bevorzugt handelt es sich bei dem mono-hydroxyfunktionalisierten Dialkyl-phosphinsäure-Salz um ein Aluminium(III)-, Calcium(II)-, Magnesium (II)-, Cer(III)-, Ti(IV)- und/oder Zink(II)salz der vorgenannten mono-hydroxyfunktionalisierten Dialkylphosphinsäuren.

Bevorzugt ist m = 1 bis 10 und k = 2 bis 10.

Bevorzugt wird das Katalysatorsystem A durch Umsetzung von einem Übergangsmetall und/oder einer Übergangsmetallverbindung und mindestens einem Liganden gebildet.

Bevorzugt handelt es sich bei den Übergangsmetallen für den Katalysator A um Elemente der siebten und achten Nebengruppe (nach moderner Nomenklatur ein Metall der Gruppe 7, 8, 9 oder 10), wie etwa Rhenium, Ruthenium, Cobalt, Rhodium, Iridium, Nickel, Palladium, Platin.

Bevorzugt werden als Quelle der Übergangsmetalle und Übergangsmetallverbindungen deren Metallsalze verwendet. Geeignete Salze sind solche von Mineralsäuren, die die Anionen Fluorid, Chlorid, Bromid, lodid, Fluorat, Chlorat, Bromat, Iodat, Fluorit, Chlorit, Bromit, Iodit, Hypofluorit, Hypochlorit, Hypobromit, Hypoiodit, Perfluorat, Perchlorat, Perbromat, Periodat, Cyanid, Cyanat, Nitrat, Nitrid, Nitrit, Oxid, Hydroxid, Borat, Sulfat, Sulfit, Sulfid, Persulfat, Thiosulfat, Sulfamat, Phosphat, Phosphit, Hypophosphit, Phosphid, Carbonat und Sulfonat, wie etwa Methansulfonat, Chlorosulfonat, Fluorosulfonat, Trifluoromethansulfonat, Benzolsulfonat, Naphthylsulfonat, Toluolsulfonat, t-Butylsulfonat, 2-Hydroxypropansulfonat und sulfonierte lonentauscherharze; und/oder organische Salze, wie etwa Acetylacetonate und Salze einer Carbonsäure mit bis zu 20 Kohlenstoffatomen, wie etwa Format, Acetat, Propionat, Butyrat, Oxalat, Stearat und Zitrat einschliessüch halogenierter Carbonsäuren mit bis zu 20 Kohlenstoffatomen, wie etwa Trifluoracetat, Trichloracetat, enthalten.

Eine weitere Quelle der Übergangsmetalle und Übergangsmetallverbindungen stellen Salze der Übergangsmetalle mit Tetraphenylborat- und halogenierten Tetraphenylboratanionen, wie etwa Perfluorophenylborat, dar.

Geeignete Salze beeinhalten ebenso Doppelsalze und Komplexsalze bestehend aus einem oder mehreren Übergangsmetallionen und unabhängig voneinander ein oder mehrere Alkalimetall-, Erdalkalimetall-, Ammonium-, organische Ammonium-, Phosphonium- und organische Phosphoniumionen und unabhängig voneinander ein oder mehrere oben genannter Anionen. Geeignete Doppelsalze stellen z. B. Ammoniumhexachloropalladat und Ammoniumtetrachloropalladat dar.

Bevorzugt ist eine Quelle der Übergangsmetalle das Übergangsmetall als Element und/oder eine Übergangsmetallverbindung in dessen null-wertigem Zustand.

Bevorzugt wird das Übergangsmetall metallisch eingesetzt oder als Legierung mit weiteren Metallen verwendet, wobei hier Bor, Zirconium, Tantal, Wolfram, Rhenium, Kobalt, Iridium, Nickel, Palladium, Platin und/oder Gold bevorzugt ist. Dabei ist der Übergangsrnetallgehalt in der eingesetzten Legierung bevorzugt 45 - 99,95 Gew.-%.

Bevorzugt wird das Übergangsmetall mikrodispers (Teilchengröße 0,1 mm-100 µm) eingesetzt.

Bevorzugt wird das Übergangsmetall auf einem Metalloxid wie etwa Aluminiumoxid, Siliciumdioxid, Titandioxid, Zirkoniumdioxid, Zinkoxid, Nickeloxid, Vanadiumoxid, Chromoxid, Magnesiumoxid, Celite^{®}, Kieselgur, auf einem Metallcarbonat wie etwa Bariumcarbonat, Calciumcarbonat, Strontiumcarbonat, auf einem Metallsulfat wie etwa Bariumsulfat, Calciumsulfat, Strontiumsulfat, auf einem Metallphosphat wie etwa Aluminiumphosphat, Vanadiumphosphat, auf einem Metallcarbid wie etwa Siliconcarbid, auf einem Metallaluminat wie etwa Calciumaluminat, auf einem Metallsilikat wie etwa Aluminiumsilikat, Kreiden, Zeolithe, Bentonit, Montmorillonit, Hectorit, auf funktionalisierten Silikaten, funktionalisierten Silikagelen wie etwa SiliaBond^{®}, QuadraSil™, auf funktionalisierten Polysiloxanen wie etwa Deloxan^{®}, auf einem Metallnitrid, auf Kohle, Aktivkohle, Mullite, Bauxite, Antimonite, Scheelite, Perovskite, Hydrotaicite, Heteropolyanionen, auf funktionalisierter und unfunktionalisierter Cellulose, Chitosan, Keratin, Heteropolyanionen, auf lonentauschern wie etwa Amberlite™, Amberjet™, Ambersep™, Dowex^{®}, Lewatit^{®}, ScavNet^{®}, auf funktionalisierten Polymeren wie etwa Chelex^{®}, QuadraPure™, Smopex^{®}, PolyOrgs^{®}, auf polymergebundenen Phosphanen, Phosphanoxiden, Phosphinaten, Phosphonaten, Phosphaten, Aminen, Ammoniumsalzen, Amiden, Thioamiden, Harnstoffen, Thioharnstoffen, Triazinen, Imidazolen, Pyrazolen, Pyridinen, Pyrimidinen, Pyrazinen, Thiolen, Thiolether, Thiolester, Alkoholen, Alkoxiden, Ether, Ester, Carbonsäuren, Acetaten, Acetalen, Peptiden, Hetarenen, Polyethylenimin/Siliciumdioxid und/oder Dendrimeren geträgert verwendet.

Geeignete Quellen der Metallsalze und/oder Übergangsmetalle stellen bevorzugt ebenfalls deren Komplexverbindungen dar. Komplexverbindungen der Metallsalze und/oder Übergangsmetalle setzen sich aus den Metallsalzen bzw. Übergangsmetalle und einem oder mehreren Komplexbildnern zusammen. Geeignete Komplexbildner sind z. B. Olefine, Diolefine, Nitrile, Dinitrile, Kohlenmonoxid, Phosphine, Diphosphine, Phosphite, Diphosphite, Dibenzylidenaceton, Cyclopentadienyl, Indenyl oder Styrol. Geeignete Komplexverbindungen der Metallsalze und/oder Übergangsmetalle können auf den oben genannten Trägermaterialien geträgert sein.

Bevorzugt ist der Gehalt an den genannten geträgerten Übergangsmetallen 0,01 bis 20 Gew.-%, vorzugsweise 0,1 bis 10 Gew.-%, insbesondere 0,2 bis 5 Gew.-%, bezogen auf die Gesamtmasse des Trägermaterials.

Geeignete Quellen von Übergangsmetallen und Übergangsmetallverbindungen sind beispielsweise Palladium, Platin, Nickel, Rhodium; Palladium Platin, Nickel oder Rhodium,auf Alumina, auf Silika, auf Bariumcarbonat, auf Bariumsulfat, auf Calciumcarbonat, auf Strontiumcarbonat, auf Kohle, auf Aktivkohle; Platin-Palladium-Gold-, Aluminum-Nickel-, Eisen-Nickel-, Lanthanoid-Nickel, Zirconium-Nickel-, Platin-Iridium-, Platin-Rhodium-Legierung; Raney^{®}-Nickel, Nickel-Zink-Eisen-Oxid; Palladium(II)-, Nickel(II)- ,Platin(II)-, Rhodiumchlorid, -bromid, -iodid, -fluorid, -hydrid, -oxid, -peroxid, -cyanid, -sulfat, -nitrat, -phosphid, -borid, -chromoxid, -cobaltoxid, -carbonathydroxid, -cyclohexanbutyrat, -hydroxid, -molybdat, -octanoat, -oxalat, -perchlorat, -phthalocyanin, -5,9,14,18,23,27,32,36-octabutoxy-2,3-naphthalocyanin, -sulfamat, -perchlorat, -thiocyanat, -bis(2,2,6,6-tetramethyl-3,5-heptanedionat), -propionat, -acetat, -stearat, -2-ethylhexanoat, -acetylacetonat, -hexafluoroacetyl-acetonat, -tetrafluoroborat, -thiosulfat, -trifluoroacetat, -phthalocyanintetrasulfonsäure Tetranatriumsalz, -methyl, -cyclopentadienyl, -methylcyclopentadienyl, -ethylcyclopentadienyl, -pentamethylcyclopentadienyl, -2,3,7,8,12,13,17,18-octaethyl-21H,23H-porphin, -5,10,15,20-tetraphenyl-21H,23H-porphin, -bis(5-[[4-(dimethylamino)phenyl]imino]-8(5H)-quinolinon), -2,11,20,29-tetra-tert-butyl-2,3-naphthalocyanin, -2,9,16,23-tetraphenoxy-29H,31H-phthalocyanin, -5,10,15,20-tetrakis(pentafluorophenyl)-21H,23H-porphin und deren 1,4-Bis(diphenylphos-phin)butan-, 1,3-Bis(diphenylphosphino)propan-, 2-(2'-Di-tert-butylphosphin)biphenyl-, Acetonitril-, Benzonitril-, Ethylendiamin-, Chloroform-, 1,2-Bis(phenyl-sulfinyl)ethan-, 1,3-Bis(2,6-diisopropylphenyl)imidazoliden)(3-chloropyridyl)-, 2'-(Dimethylamino)-2-biphenylyl-, Dinorbornylphosphin-, 2-(Dimethylamino-methyl)ferrocen-, Allyl-, Bis(Diphenylphosphino)butan-, (N-succinimidyl)bis-(triphenylphosphin)-, Dimethyl-phenylphosphin-, Methyldiphenylphosphin-, 1,10-Phenanthrolin-, 1,5-Cyclooctadien-, N,N,N',N'-Tetramethylethylendiamin-, Triphenyl-phosphin-, Tri-o-tolylphosphin-, Tricyclohexylphosphin-, Tributylphosphin-, Triethylphosphin-, 2,2'-Bis(diphenylphos-phino)-1,1'-binaphthyl-, 1,3-Bis(2,6-diisopropylphenyl)imidazol-2-yliden-, 1,3-Bis(mesityl)imidazol-2-yliden-, 1,1'-Bis(diphenylphosphino)ferrocen-, 1,2-Bis(diphenylphosphino)ethan-, N-Methylimidazol-, 2,2'-Bipyridin-, (Bicyclo[2.2.1]-hepta-2,5-dien)-, Bis(di-tert-butyl(4-dimethylaminophenyl)phosphin)-, Bis(tert.-butylisocyanid)-, 2-Methoxyethylether-, Ethylenglycoldimethylether-, 1,2-Dimethoxy-ethan-, Bis(1,3-diamino-2-propanol)-, Bis(N,N-diethylethylendiamin)-, 1,2-Diamino-cyctohexan-, Pyridin-, 2,2':6',2"-terpyridin-, Diethylsulfid-, Ethylen-,Amin-Komplexe; Kalium-, Natrium-, Ammoniumhexachloropalladat(IV), Kalium-, Natrium-, Ammoniumtetrachloropalladat(II), Bromo(tri-tert-butylphosphin)palladium(I) Dimer, (2-Methyl-allyl)palladium(II)chlorid Dimer, Bis(dibenzylidenaceton)palladium(0), Tris(di-benzylidenaceton)dipalladium(0), Tetrakis(triphenylphosphin)palladium(0), Tetrakis-(tricyclohexylphosphin)palladium (0), Bis[1,2-bis(diphenylphosphin)ethan]-palladium(0), Bis(3,5,3',5'-dimethoxydibenzylidenaceton)palladium(0), Bis(tri-tert-butylphosphin)palladium(0), meso-Tetraphenyltetrabenzoporphin Palladium, Tetrakis(methyldiphenylphosphin)palladium(0), Tris(3,3',3"-phophinidyn-tris(benzolsulfonato)palladium(0) Nonanatriumsalz, 1,3-Bis(2,4,6-trimethylphenyl)-imidazol-2-yliden(1,4-naphthoquinon)palladium(0), 1,3-Bis(2,6-diisopropylphenyl)-imidazol-2-yliden(1,4-naphthoquinon)palladium(0), und deren Chloroform-Komplex;
Allylnickel(II)chlorid Dimer, Ammoniumnickel(II)sulfat, Bis(1,5-cyclooctadien)nickel(0), Bis(triphenylphosphin)dicarbonylnickel(0), Tetrakis(triphenylphosphin)nickel(0), Tetrakis(triphenylphosphit)nickel(0), Kaliumhexafluoronickelat(IV), Kaliumtetracyanonickelat(II), Kaliumnickel(IV)paraperiodat, Dilithiumtetrabromonickelat(II), Kaliumtetracyanonickelat(II);
Platin(IV)chlorid, -oxid, -sulfid, Kalium-, Natrium-,
Ammoniumhexachloroplatinat(IV), Kalium-, Ammoniumtetrachloroplatinat(II), Kaliumtetracyanoplatinat(II), Trimethyl(methylcyclopentadienyl)platin(IV), cis-Diammintetrachloroplatin(IV), Kaliumtrichloro(ethylen)platinat(II), Natriumhexahydroxyplatinat(IV), Tetraaminplatin(II)tetrachloroplatinat(II), Tetrabutylammoniumhexachloroplatinat(IV), Ethylenbis(triphenylphosphin)platin(0), Platin(0)-1,3-divinyl-1,1,3,3-tetramethyldisiloxan, Platin(0)-2,4,6,8-tetramethyl-2,4,6,8-tetravinylcyclotetrasiloxan, Tetrakis(triphenylphos-phin)platin(0), Platinoctaethylporphyrin, Chloroplatinsäure, Carboplatin; Chlorobis(ethylen)rhodium Dimer, Hexarhodiumhexadecacarbonyl, Chloro(1,5-cyclooctadien)rhodium Dimer, Chloro(norbomadien)-rhodium Dimer, Chloro(1,5-hexadien)rhodium Dimer.

Bevorzugt handelt es sich bei den Liganden um Phosphine der Formel (VII)

PR¹⁰₃ (VII)

in der die Reste R¹⁰ unabhängig voneinander für Wasserstoff, geradkettiges, verzweigtes oder cyclisches C₁-C₂₀-Alkyl, C₁-C₂₀-Alkylaryl, C₂-C₂₀-Alkenyl, C₂-C₂₀-Alkinyl, C₁-C₂₀-Carboxyat, C₁-C₂₀-Alkoxy, C₁-C₂₀-Alkenyloxy, C₁-C₂₀-Alkinyloxy, C₂-C₂₀-Alkoxy-carbonyl, C₁-C₂₀-Alkylthio, C₁-C₂₀-Alkylsulfonyl, C₁-C₂₀-Alkylsulfinyl, Silyl und/oder deren Derivative und/oder durch wenigstens ein R¹¹ substituiertes Phenyl- oder durch wenigstens ein R¹¹ substituiertes Naphtyl stehen. R¹¹ steht unabhängig voneinander für Wasserstoff, Fluor, Chlor, Brom, lod, NH₂, Nitro, Hydroxy, Cyano, Formyl, geradkettiges, verzweigtes oder cyclisches C₁-C₂₀-Alkyl, C₁-C₂₀-Alkoxy, HN(C₁-C₂₀-Alkyl), N(C₁-C₂₀-Alkyl)₂, -CO₂-(C₁-C₂₀-Alkyl), -CON(C₁-C₂₀-Alkyl)₂, -OCO(C₁-C₂₀-Alkyl), NHCO(C₁-C₂₀-Alkyl), C₁-C₂₀-Acyl, -SO₃M, -SO₂N(R¹²)M, -CO₂M, -PO₃M₂, -AsO₃M₂, -SiO₂M, -C(CF₃)₂OM (M = H, Li, Na oder K), wobei R¹² Wasserstoff, Fluor, Chlor, Brom, lod, geradkettiges, verzweigtes oder cyclisches C₁-C₂₀-Alkyl, C₂-C₂₀-Alkenyl, C₂-C₂₀-Alkinyl, C₁-C₂₀-Carboxyat, C₁-C₂₀-Alkoxy, C₁-C₂₀-Alkenyloxy, C₁-C₂₀-Alkinyloxy, C₂-C₂₀-Alkoxycarbonyl, C₁-C₂₀-Alkylthio, C₁-C₂₀-Alkylsulfonyl, C₁-C₂₀-Alkylsulfinyl, Silyl und/oder deren Derivative, Aryl, C₁-C₂₀-Arylalkyl , C₁-C₂₀-Alkylaryl, Phenyl und/oder Biphenyl bedeutet. Vorzugsweise sind alle Gruppen R¹⁰ identisch.

Geeignete Phosphine (VII) sind beispielsweise Trimethyl-, Triethyl-, Tripropyl-, Triisopropyl-, Tributyl-, Triisobutyl-, Triisopentyl-, Trihexyl-, Tricyclohexyl-, Trioctyl-, Tridecyl-, Triphenyl-, Diphenylmethyl-, Phenyldimethyl-, Tri(o-tolyl)-, Tri(p-tolyl)-, Ethyldiphenyl-, Dicyclohexylphenyl-, 2-Pyridyldiphenyl-, Bis(6-methyl-2pyridyl)-phenyl-, Tri-(p-chlorophenyl)-, Tri-(p-methoxyphenyl)-, Diphenyl(2-sulfonatophenyl)phosphin; Kalium-, Natrium- und Ammoniumsalze von Diphenyl(3-sulfonatophenyl)phosphin, Bis(4,6-dimethyl-3-sulfonatophenyl)(2,4-dimethylphenyl)phosphin, Bis(3-sulfonatophenyl)phenylphosphinen, Tris(4,6-dimethyl-3-sulfonatophenyl)phosphinen, Tris(2-sulfonatophenyl)phosphinen, Tris(3-sulfonatophenyl)phosphinen; 2-Bis(diphenylphosphinoethyl)trimethyl-ammoniumiodid, 2'-Dicyclohexylphosphino-2,6-dimethoxy-3-sulfonato-1,1'-biphenyl Natriumsalz, Trimethylphosphit und/oder Triphenylphosphit.

Besonders bevorzugt handelt es sich bei den Liganden um bidentate Liganden der allgemeinen Formel

R¹⁰₂M"-Z-M"R¹⁰₂ (VIII).

In dieser Formel repräsentieren M" unabhängig voneinander N, P, As oder Sb. Bevorzugt sind die beiden M" gleich und besonders bevorzugt steht M" für ein Phosphoratom.

Jede Gruppe R¹⁰ repräsentiert unabhängig voneinander die unter Formel (VII) beschrieben Reste. Vorzugsweise sind alle Gruppen R¹⁰ identisch.

Z stellt bevorzugt eine bivalente Überbrückungsgruppe dar, die wenigstens 1 Brückenatom enthält, wobei bevorzugt 2 bis 6 Brückenatome enthalten sind.

Brückenatome können ausgewählt werden aus C-, N-, O-, Si- und S-Atomen. Bevorzugt ist Z eine organische Überbrückungsgruppe, die wenigstens ein Kohlenstoffatom enthält. Bevorzugt ist Z eine organische Überbrückungsgruppe, die 1 bis 6 Brückenatome enthält, wovon wenigstens zwei Kohlenstoffatome sind, unsubstituiert oder substituiert sein können.

Bevorzugte Gruppen Z sind -CH₂-, -CH₂-CH₂-, -CH₂-CH₂-CH₂-, -CH₂-CH(CH₃)-CH₂-, -CH₂-C(CH₃)₂-CH₂-, -CH₂-C(C₂H₅)-CH₂-, -CH₂-Si(CH₃)₂-CH₂-, -CH₂-O-CH₂-, -CH₂-CH₂-CH₂-CH₂-, -CH₂-CH(C₂H₅)-CH₂-, -CH₂-CH(n-Pr)-CH und -CH₂-CH(n-Bu)-CH₂-, unsubstituierte oder substituierte 1,2-Phenyl-, 1,2-Cyclohexyl-, 1,1'- oder 1,2-Ferrocenyl-Reste, 2,2'-(1,1'-Biphenyl)-, 4,5-Xanthen- und/oder Oxydi-2,1-phenylen-Reste.

Geeignete bidentate Phosphinliganden (VIII) sind beispielsweise 1,2-Bis(dimethyl-), 1,2-Bis(diethyl-), 1,2-Bis(dipropyl-), 1,2-Bis(diisopropyl-), 1,2-Bis(dibutyl-), 1,2-Bis(di-tert.-butyl-), 1,2-Bis(dicyclohexyl-) und 1,2-Bis(diphenylphosphino)ethan; 1,3-Bis(dicyclohexyl-), 1,3-Bis(diisopropyl-), 1,3-Bis(di-tert.-butyl-) und 1,3-Bis(diphenyl-phosphino)propan; 1,4-Bis-(diisopropyl-) und 1,4-Bis(diphenylphosphino)butan; 1,5-Bis(dicyclohexylphosphino)pentan; 1,2-Bis(di-tert.-butyl-), 1,2-Bis(di-phenyl-), 1,2-Bis(di-cyclohexyl-), 1,2-Bis(dicyclo-pentyl-), 1,3-Bis(di-tert.-butyl-), 1,3-Bis(diphenyl-), 1,3 Bis(di-cyclohexyl-) und 1,3-Bis(dicyclopentylphosphino)benzol; 9,9-Dimethyl-4,5-bis(diphenylphosphino)xanthen, 9,9-Dimethyl-4,5-bis(diphenylphosphino)-2,7-di-tert.-butylxanthen, 9,9-Dimethyl-4,5-bis(di-tert.-butylphosphino)xanthen, 1,1'-Bis(diphenyl-phosphino)-ferrocen, 2,2'-Bis(diphenylphosphino)-1,1'-binaphthyl, 2,2'-Bis(di-p-tolylphosphino)-1,1'-binaphthyl, (Oxydi-2,1-phenyfen)bis(diphenylphosphin), 2,5-(Di-isopropylphospholano)benzol, 2,3-O-Isopropropyliden-2,3-dihydroxy-1,4-bis(diphenyl-phosphino)butan, 2,2'-Bis(di-tert.-butylphosphino)-1,1'-biphenyl, 2,2'-Bis(dicyclohexyl-phosphino)-1,1'-biphenyl, 2,2'-Bis(diphenylphosphino)-1,1'-biphenyl, 2-(Di-tert.-butylphosphino)-2'-(N,N-dimethylamino)biphenyl, 2-(Dicyclohexylphosphino)-2'-(N,N-dimethylamino)biphenyl, 2-(Diphenylphosphino)-2'-(N,N-dimethylamino)biphenyl, 2-(Diphenylphosphino)ethyl-amin,
2-[2-(Diphenylphosphino)ethyl]pyridin; Kalium-, Natrium- und Ammoniumsalze von 1,2-Bis(di-4-sulfonatophenylphosphino)-benzol, (2,2'-Bis[[bis(3-sulfonato-phenyl)phosphino]methyl]-4,4',7,7'-tetrasulfonato-1,1'-binapthyl, (2,2'-Bis[[bis(3-sulfonatophenyl)phosphino]methyl]-5,5'-tetrasulfonato-1,1'-biphenyl, (2,2'-Bis [[bis(3-sulfonatophenyl)phosphino]methyl]-1,1'-binapthyl, (2,2'-Bis[[bis(3-sulfonatophenyl)phosphino]-methyl]-1,1'-biphenyl, 9,9-Dimethyl-4,5-bis(diphenylphosphino)-2,7-sulfonatoxanthen, 9,9-Dimethyl-4,5-bis(di-tert.-butylphosphino)-2,7-sulfonatoxanthen, 1,2-Bis(di-4-sulfonatophenylphosphino)-benzol, Meso-tetrakis(4-sulfonatophenyl)porphin, Meso-tetrakis(2,6-dichloro-3-sulfonatophenyl)porphin, Meso-tetrakis(3-sulfonatomesityl)porphin, Tetrakis(4-carboxyphenyl)porphin und 5,11,17,23-Sulfonato-25,26,27,28-tetrahydroxycalix[4]aren.

Zudem können die Liganden der Formel (VII) und (VIII) durch die Reste R¹⁰ und/oder die Überbrückungsgruppe an ein geeignetes Polymer oder anorganisches Substrat gebunden sein.

Das Katalysatorsystem hat ein Übergangsmetall-Ligand-Molverhältnis von 1:0,01 bis 1:100, bevorzugt von 1:0,05 bis 1:10 und insbesondere von 1:1 bis 1:4. Bevorzugt erfolgen die Umsetzungen in den Verfahrensstufen a), b), c) und d) wahlweise in einer Atmosphäre, die weitere gasförmige Bestandteile wie zum Beispiel Stickstoff, Sauerstoff, Argon, Kohlendioxid enthält; die Temperatur beträgt -20 bis 340 °C, insbesondere 20 bis 180 °C und der Gesamtdruck von 1 bis 100 bar.

Die Isolierung der Produkte und/oder des Übergangs-metalls und/oder der Übergangsmetallverbindung und/oder Katalysatorsystems und/oder des Liganden und/oder der Edukte nach den Verfahrensstufen a), b) c) und d) erfolgt wahlweise durch Destillation oder Rektifikation, durch Kristallisation oder Fällen, durch Filtration oder Zentrifugieren, durch Adsorption oder Chromatographie oder anderen bekannten Methoden.

Erfindungsgemäß werden Lösungsmittel, Hilfsmittel und ggf. andere flüchtige Bestandteile durch z.B. Destillation, Filtration und/oder Extraktion abgetrennt.

Bevorzugt erfolgt die Umsetzungen in den Verfahrensstufen a), b) c) und d) wahlweise in Absorptionskolonnen, Sprühtürmen, Blasensäulen, Rührkesseln, Reiselbettreaktor, Strömumgsrohren, Schlaufenreaktoren und/oder Knetern.

Geeignete Mischorgane sind z. B. Anker-, Blatt-, MIG-, Propeller-, Impeller-, Turbinen-, Kreuz-Rührer, Dispergierscheiben, Hohl-(Begasungs-)-Rührer, Rotor-Stator-Mischer, statische Mischer, Venturi-Düsen und/oder Mammutpumpen.

Bevorzugt erfahren die Reaktionslösungen/-mischungen dabei eine Mischintensität, die einer Rotations-Reynolds-Zahl von 1 bis 1.000.000, bevorzugt von 100 bis 100.000 entspricht.

Bevorzugt erfolgt eine intensive Durchmischung der jeweiligen Reaktionspartner etc. unter einem Energieeintrag von 0,080 bis 10 kW/m³, bevorzugt 0,30 - 1,65 kW/m³.

Bevorzugt wirkt der jeweilige Katalysator A während der Umsetzung homogen und/oder heterogen. Daher wirkt der jeweils heterogen wirkende Katalysator während der Umsetzung als Suspension oder an eine feste Phase gebunden.

Bevorzugt wird der jeweilige Katalysator A vor der Umsetzung und/oder zu Beginn der Umsetzung und/oder während der Umsetzung in situ generiert.

Bevorzugt erfolgt die jeweilige Umsetzung in einem Lösungsmittel als Ein-PhasenSystem in homogener oder heterogener Mischung und/oder in der Gasphase.

Wird ein Mehr-Phasen-System verwendet kann zusätzlich ein Phasentransferkatalysor eingesetzt werden.

Die erfindungsgemäßen Reaktionen können in flüssiger Phase, in der Gasphase oder auch in überkritischer Phase durchgeführt werden. Dabei wird der jeweilige Katalysator A bei Flüssigkeiten vorzugsweise homogen oder als Suspension eingesetzt, während bei Gasphasen- oder überkritischer Fahrweise eine Festbettanordnung von Vorteil ist.

Geeignete Lösungsmittel sind Wasser, Alkohole, wie z. B. Methanol, Ethanol, i-Propanol, n-Propanol, n-Butanol, i-Butanol, t-Butanol, n-Amylalkohol, i-Amylalkohol, t-Amylalkohol, n-Hexanol, n-Octanol, i-Octanol, n-Tridecanol, Benzylalkohol etc. Bevorzugt sind weiterhin Glycole wie z.B. Ethylenglycol, 1,2-Propandiol, 1,3-Propandiol, 1,3-Butandiol, 1,4-Butandiol, Diethylenglycol etc.; aliphatische Kohlen-wasserstoffe wie Pentan, Hexan, Heptan, Octan, und Petrolether, Petroleumbenzin, Kerosin, Petroleum, Paraffinöl etc.; aromatische Kohlenwasserstoffe wie Benzol, Toluol, Xylol, Mesitylen, Ethylbenzol, Diethylbenzol etc.; Halogenkohlenwasserstoffe wie Methylenchlorid, Chloroform, 1,2-Dichloroethan, Chlorobenzol, Tetrachlorkohlenstoff, Tetrabromoethylen etc.; alicyclische Kohlenwasserstoffe wie Cyclopentan, Cyclohexan, und Methylcyclohexan etc.; Ether wie Anisol (Methylphenylether), t-Butylmethylether, Dibenzylether, Diethylether, Dioxan, Diphenylether, Methylvinylether, Tetrahydrofuran, Triisopropylether etc.; Glycolether wie

Diethylenglycoldiethylether, Diethylenglycoldi-methylether (Diglyme), Diethylenglycolmonobutylether, Diethylenglycolmono-methylether, 1,2-Dimethoxy-ethan (DME Monoglyme), Ethylenglycolmonobutylether, Triethylenglycoldimethylether (Triglyme), Triethylenglycolmonomethylether etc.; Ketone wie Aceton, Diisobutylketon, Methyl-n-propylketon; Methylethylketon, Methyl-i-butylketon etc; Ester wie Methylformat, Methylacetat, Ethylacetat, n-Propylacetat und n-Butylacetat etc.; Carbonsäuren wie Ameisensäure, Essigsäure, Propionsäure, Buttersäure etc.; einzeln oder in Kombination miteinander.

Geeignete Lösungsmittel sind auch die eingesetzten Olefine und Phosphinsäurequellen. Diese bieten Vorteile in Form einer höheren Raum-Zeit-Ausbeute.

Bevorzugt wird die Umsetzung unter dem eigenen Dampfdruck des Olefins und/oder des Lösungsmittels durchgeführt.

Bevorzugt sind R¹, R², R³, R⁴ des Olefins (IV) gleich oder verschieden und bedeuten, unabhängig voneinander, H, Methyl, Ethyl, n-Propyl, Isopropyl, n-Butyl, Isobutyl, tert.-Butyl und/oder Phenyl.

Bevorzugt werden auch funktionalisierte Olefine wie Allylisothiocyanat, Allylmethacrylat, 2-Allylphenol, N-Allylthioharnstoff, 2-(Allylthio)-2-thiazolin, Allyltrimethylsillan, Allylacetat, Allylacetoacetat, Allylalkohol, Allylamin, Allylbenzol, Allylcyanid, Allyl-(cyanacetat), Allylanisol, trans-2-Pentenal, cis-2-Pentennitril, 1-Penten-3-ol, 4-Penten-1-ol, 4-Penten-2-ol, trans-2-Hexenal, trans-2-Hexen-1-ol, cis-3-Hexen-1-ol, 5-Hexen-1-ol, Styrol, -Methylstyrol, 4-Methylstyrol, Vinylacetat, 9-Vinylanthracen, 2-Vinylpyridin, 4-Vinylpyridin und/oder 1-Vinyl-2-pyrrolidon eingesetzt.

Bevorzugt erfolgt die Umsetzung bei einem Partialdruck des Olefins von 0,01 - 100 bar, sesonders bevorzugt bei einem Partialdruck des Olefins von 0,1 - 10 bar.

Bevorzugt erfolgt die Umsetzung in einem Phosphinsäure-Olefin-Molverhältnis von 1:10.000 bis 1:0,001, besonders bevorzugt im Verhältnis von 1:30 bis 1:0,01.

Bevorzugt erfolgt die Umsetzung in einem Phosphinsäure-Katalysator-Molverhältnis von 1:1 bis 1:0,00000001, besonders bevorzugt bei 1:0,01 bis 1:0,000001.

Bevorzugt erfolgt die Umsetzung in einem Phosphinsäure-Lösungsmittel-Molverhältnis von 1:10.000 bis 1:0, besonders bevorzugt bei 1:50 bis 1:1.

Ein erfindungsgemäßes Verfahren zur Herstellung von Verbindungen der Formel II ist dadurch gekennzeichnet, dass man eine Phosphinsäurequelle mit Olefinen in Gegenwart eines Katalysators umsetzt und das Produkt II (Alkylphosphonigsäure bzw. -salze, -ester) von Katalysator, Übergangsmetall bzw. Übergangsmetallverbindung, Ligand, Komplexbildner, Salzen und Nebenprodukten befreit wird.

Erfindungsgemäß wird der Katalysator, das Katalysatorsystem, das Übergangsmetall und/oder die Übergangsmetallverbindung abgetrennt durch Zugabe eines Hilfsmittels 1 und Entfernen des Katalysators, des Katalysatorsystems, des Übergangsmetalls und/oder der Übergangsmetallverbindung durch Extraktion und/oder Filtration.

Erfindungsgemäß wird der Ligand und/oder Komplexbildner durch Extraktion mit Hilfsmittel 2 und/oder Destillation mit Hilfsmittel 2 abgetrennt.

Hilfsmittel 1 ist bevorzugt Wasser und/oder mindestens ein Vertreter der Familie der Metallfänger (Metal Scavenger). Bevorzugte Metallfänger sind Metalloxide wie etwa Aluminiumoxid, Siliciumdioxid, Titandioxid, Zirkoniumdioxid, Zinkoxid, Nickeloxid, Vanadiumoxid, Chromoxid, Magnesiumoxid, Celite^{®}, Kieselgur, Metallcarbonate wie etwa Bariumcarbonat, Calciumcarbonat, Strontiumcarbonat, Metallsulfate wie etwa, Bariumsulfat, Calciumsulfat, Strontiumsulfat, Metallphosphate wie etwa Aluminiumphosphat, Vanadiumphosphat, Metallcarbide wie etwa Siliconcarbid, Metallaluminate wie etwa Calciumaluminat, Metallsilikate wie etwa Aluminiumsilikat, Kreiden, Zeolithe, Bentonit, Montmorillonit, Hectorit, funktionalisierte Silikate, funktionalisierte Silikagele wie etwa SiliaBond^{®}, QuadraSil™, funktionalisierte Polysiloxane wie etwa Deloxan^{®}, Metallnitride, Kohle, Aktivkohle, Mullite, Bauxite, Antimonite, Scheelite, Perovskite, Hydrotalcite, funktionalisierte und unfunktionalisierte Cellulose, Chitosan, Keratin, Heteropolyanionen, lonentauscher wie etwa Amberlite™, Amberjet™, Ambersep™, Dowex^{®}, Lewatit^{®}, ScavNet^{®}, funktionalisierte Polymere wie etwa Chelex^{®}, QuadraPure™, Smopex^{®}, PolyOrgs^{®}, polymergebundene Phosphane, Phosphanoxide, Phosphinate, Phosphonate, Phosphate, Amine, Ammoniumsalze, Amide, Thioamide, Harnstoffe, Thioharnstoffe, Triazine, Imidazole, Pyrazole, Pyridine, Pyrimidine, Pyrazine, Thiole, Thiolether, Thiolester, Alkohole, Alkoxide, Ether, Ester, Carbonsäuren, Acetate, Acetale, Peptide, Hetarene, Polyethylenimin/Siliciumdioxid und/oder Dendrimere.

Bevorzugt wird Hilfsmittel 1 in Mengen zugesetzt, die einer 0,1 - 40 gew.-%igen Beladung des Metalls auf dem Hilfsmittel 1 entsprechen.

Bevorzugt wird Hilfsmittel 1 bei Temperaturen von 20 - 90 °C eingesetzt.

Bevorzugt beträgt die Verweilzeit von Hilfsmittel 1 0,5 - 360 Minuten.

Hilfsmittel 2 ist bevorzugt das vorgenannte, erfindungsgemäße Lösungsmittel, wie sie bevorzugt in der Verfahrensstufe a) eingesetzt werden.

Die Veresterung der mono-hydroxyfunktionalisierten Dialkylphosphinsäure (III) bzw. der mono-funktionalisierten Dialkylphosphinsäure (VI) bzw. der Alkylphosphonigsäuredrivate (II) sowie der Phosphinsäurequelle (I) zu den entsprechenden Estern kann beispielsweise durch Umsetzung mit höhersiedenden Alkoholen unter Entfernung des gebildeten Wassers durch Azeotropdestillation oder durch Umsetzung mit Epoxiden (Alkylenoxiden) erreicht werden.

Bevorzugt wird hierbei nach Schritt a) die Alkylphosphonigsäure (II) mit einem Alkohol der allgemeinen Formel M-OH und/oder M'-OH oder durch Umsetzung mit Alkylenoxiden, wie nachfolgend angeführt, direkt verestert.

Bevorzugt sind M-OH primäre, sekundäre oder tertiäre Alkohole mit einer Kohlenstoffkettenlänge von C₁-C₁₈. Besonders bevorzugt sind Methanol, Ethanol, Propanol, Isopropanol, n-Butanol, 2-Butanol, tert.-Butanol, Amylalkohol und/oder Hexanol.

Bevorzugt sind M'-OH Ethylenglykol, 1,2-Propylen-glykol, 1,3-Propyiengfykol, 1,4-Butandiol, 2,2-Dimethylpropan-1,3-diol, Neopentyl-glykol, 1,6-Hexandiol, 1,4-Cyclohexan-dimethanol, Glycerin, Trishydroxymethylethan, Trishydroxymethylpropan, Pentaerythrit, Sorbit, Mannit, α-Naphthol, Polyethylenglykole, Polypropylenglykole und/oder EO-PO-Blockpolymere.

Geeignet sind als M-OH und M'-OH auch ein- oder mehrwertige, ungesättigte Alkohole mit einer Kohlenstoffkettenlänge von C₁₋₁₈, etwa n-Buten-2-ol-1, 1,4-Butendiol und Allylalkohol.

Geeignet sind als M-OH und M'-OH auch Umsetzungsprodukte von einwertigen Alkoholen mit einem oder mehreren Molekülen von Alkylenoxiden, besonders bevorzugt sind Ethylenoxid und 1,2-Propylenoxid. Bevorzugt sind 2-Methoxyethanol, 2-Ethoxy-ethanol, 2-n-Butoxy-ethanol, 2-(2'-Ethyl-hexytoxy)-ethanol, 2-n-Dodecoxyethanol, Methyldiglykol, Ethyldiglykol, Isopropyldiglykol, Fettalkoholpolyglykolether und Arylpolyglykolether.

Bevorzugt sind M-OH und M'-OH auch Umsetzungsprodukte von mehrwertigen Alkoholen mit einem oder mehreren Molekülen Alkylenoxid, insbesondere Diglykol und Triglykol sowie Addukte von 1 bis 6 Molekülen Ethylenoxid oder Propylenoxid an Glycerin, Trishydroxymethylpropan oder Pentaerythrit.

Als M-OH und M'-OH können auch Umsetzungsprodukte von Wasser mit einem oder mehreren Molekülen Alkylenoxid eingesetzt werden. Bevorzugt sind Polyethylenglykole und Poly-1,2-propylenglykole verschiedener Molekulargrößen mit einem mittleren Molgewicht von 100-1.000 g/mol, besonders bevorzugt von 150-350 g/mol.

Bevorzugt sind als M-OH und M'-OH auch Umsetzungsprodukte von Ethylenoxid mit Poly-1,2-propylen-glykolen oder Fettalkoholpropylenglykole; ebenso Umsetzungsprodukte von 1,2-Propylenoxid mit Polyethylenglykolen oder Fettalkoholethoxylaten. Bevorzugt sind solche Umsetzungsprodukte mit einem mittleren Molgewicht von 100-1.000 g/mol, besonders bevorzugt von 150-450 g/mol.

Einsetzbar sind als M-OH und M'-OH auch Umsetzungsprodukte von Alkylenoxiden mit Ammoniak, primären oder sekundären Aminen, Schwefelwasserstoff, Merkaptanen, Sauerstoff-säuren des Phosphors und C₂-C₆-Dicarbonsäuren. Geeignete Umsetzungs-produkte von Ethylenoxid mit Stickstoffverbindungen sind Triethanolamin, Methyldi-ethanolamin, n-Butyl-diethanolamin, n-Dodecyl-diethanolamin, Dimethylethanolamin, n-Butyl-methyl-ethanolamin, Di-n-butyl-ethanolamin, n-Dodecylmethyl-ethanolamin, Tetrahydroxyethyl-ethylendiamin oder Pentahydroxyethyl-diethylentriamin.

Bevorzugte Alkylenoxide sind Ethylenoxid, 1,2-Propylenoxid, 1,2-Epoxybutan, 1,2-Epoxyethylbenzol, (2,3-Epoxypropyl)benzol, 2,3-Epoxy-1-propanol und 3,4-Epoxy-1-buten.

Geeignete Lösungsmittel sind die im Verfahrensschritt a) genannten Lösungsmittel und auch die eingesetzten Alkohole M-OH und M'-OH und Alkylenoxide. Diese bieten Vorteile in Form einer höheren Raum-Zeit-Ausbeute.

Bevorzugt wird die Umsetzung unter dem eigenen Dampfdruck des eingesetzten Alkohols M-OH und M'-OH und Alkylenoxids und/oder des Lösungsmittels durchgeführt.

Bevorzugt erfolgt die Umsetzung bei einem Partialdruck des eingesetzten Alkohols M-OH und M'-OH und Alkylenoxids von 0,01 - 100 bar, sesonders bevorzugt bei einem Partialdruck des Olefins von 0,1 - 10 bar.

Bevorzugt wird die Umsetzung bei einer Temperatur von -20 bis 340 °C durchgeführt, sesonders bevorzugt bei einer Temperatur von 20 bis 180 °C.

Bevorzugt erfolgt die Umsetzung bei einem Gesamtdruck von 1 bis 100 bar.

Bevorzugt erfolgt die Umsetzung in einem Molverhältnis der Alkohol- bzw. Alkylenoxidkomponente zu der Phosphinsäurequelle (I) bzw. Alkylphosphonigsäure (II) bzw. mono-funktionalisierten Dialkylphosphinsäure (VI) bzw. mono-hydroxyfunktionalisierte Dialkylphosphinsäure (III) von 10.000:1 bis 0,001:1, besonders bevorzugt im Verhältnis von 1.000:1 bis 0,01:1.

Bevorzugt erfolgt die Umsetzung in einem Molverhältnis der Phosphinsäurequelle (I) bzw. Alkylphosphonigsäure (II) bzw. mono-funktionalisierten Dialkylphosphinsäure (VI) bzw. mono-hydroxyfunktionalisierte Dialkylphosphinsäure (III) zum Lösungsmittel von 1:10.000 bis 1:0, besonders bevorzugt in einem Phosphinsäure-Lösungsmittel-Molverhältnis von 1:50 bis 1:1.

Bevorzugte Katalysatoren B, wie sie für den Verfahrensschritt b) für die Umsetzung der Alkylphosphonigsäure, deren Salze oder Ester (II) mit einem Vinylester einer Carbonsäure (V) zur mono-funktionalisierten Dialkylphosphinsäure, deren Salze und Ester (VI) eingesetzt wird, sind PeroxoVerbindungen wie Peroxomonoschwefelsäure, Kaliummonopersulfat (Kaliumperoxomonosulfat), Caroat™, Oxone™, Peroxodischwefelsäure, Kaliumpersulfat (Kaliumperoxodisulfat), Natriumpersulfat (Natriumperoxodisulfat), Ammoniumpersulfat (Ammoniumper-oxodisulfat).

Bevorzugte Katalysatoren B sind zudem Verbindungen, die im Lösemittelsystem Peroxide bilden können wie Natriumperoxid, -hydrate, Natriumperoxiddiperoxohydrat, -hydrate, Lithiumperoxid, -hydrate, Calciumperoxid, Strontiumperoxid, Bariumperoxid, Magnesiumperoxid, Zinkperoxid, Kaliumhyperoxid, -hydrate, Natriumperoxoborat, -hydrate, Kaliumperoxoboratperoxohydrat, Magnesiumperoxoborat, Calciumperoxoborat, Bariumperoxoborat, Strontiumperoxoborat, Kaliumperoxoborat, Peroxomonophosphorsäure, Peroxodiphosphorsäure, Kaliumperoxodiphosphat, Ammoniumperoxodiphosphat, Kaliumammoniumperoxodiphosphate, Natriumcarbonatperoxohydrat, Harnstoffperoxohydrat, Ammoniumoxalatperoxid, Bariumperoxidperoxohydrat, Bariumperoxidperoxohydrat, Calciumhydrogenperoxide, Calciumperoxidperoxohydrat, Ammoniumtriphosphatdiperoxophosphathydrat, Kaliumfluoridperoxohydrat, Kaliumfluoridtriperoxohydrat, Kaliumfluoriddiperoxohydrat, Natriumpyrophosphatdiperoxohydrat, Natriumpyrophosphatdiperoxohydratoctahydrat, Kaliumacetatperoxohydrat, Natriumphosphatperoxohydrat, Natriumsilicatperoxohydrat.

Bevorzugte Katalysatoren B sind auch Wasserstoffperoxid, Perameisensäure, Peressigsäure, Benzoylperoxid, Di-tert-butylperoxid, Dicumylperoxid, 2,4-Dichloro-benzoylperoxid, Decanoylperoxid, Laurylperoxid, Cumolhydroperoxid, Pinenhydroperoxid, p-Menthanhydroperoxid, tert-Butylhydroperoxid, Acetylacetonperoxid, Methylethylketonperoxid, Bemsteinsäureperoxid, Dicetylperoxydicarbonat, tert-Butylperoxyacetat, tert-Butylperoxymaleinsäure, tert-Butylperoxybenzoat, Acetylcyclohexylsulfonylperoxid.

Bevorzugte Katalysatoren B sind zudem wasserlösliche Azo-Verbindungen. Besonders bevorzugt sind Azoinitiatoren wie VAZO^{®} 52 2,2'-Azobis(2,4-dimethyl-valeronitril), VAZO^{®} 64 (Azo-bis-(isobutyronitril), AIBN), VAZO^{®} 67 2,2'-Azobis(2-methylbutyronitril), VAZO^{®} 88 1,1'-Azobis(cyclohexane-1-carbonitril), VAZO^{®} 68 der Fa. Dupont-Biesteritz, V-70 2,2'-Azobis(4-methoxy-2,4-dimethyl valeronitril), V-65 2,2'-Azobis(2,4-dimethyl-valeronitril), V-601 Dimethyl 2,2'-azobis(2-methylpropionat), V-59 2,2'-Azobis(2-methylbutyronitril), V-40 1,1'-Azobis(cyclohexane-1-carbonitril), VF-096 2,2'-Azobis[N-(2-propenyl)-2-methylpropionamid], V-30 1-[(cyano-1-methylethyl)azo]formamid, VAm-110 2,2'-Azobis(N-butyl-2-methyl-propionamid), VAm-111 2,2'-Azobis(N-cyclohexyl-2-methylpropionamid), VA-046B 2,2'-Azobis[2-(2-imidazolin-2-yl)propandisulfatedihydrate, VA-057 2,2'-Azobis[N-(2-carboxyethyl)-2-methylpropionamidin]tetrahydrat, VA-061 2,2'-Azobis[2-(2-imidazolin-2-yl)propan], VA-080 2,2'-Azobis{2-methyl-N-[1,1-bis(hydroxy-methyl)-2-hydroxyethyl] propionamid, VA-085 2,2'-Azobis{2-methyl-N-[2-(1-hydroxy-buthyl)]propionamid}, VA-086 2,2'-Azobis[2-methyl-N-(2-hydroxyethyl)-propionamid] von Wako Chemicals.

Geeignet sind auch Azoinitiatoren wie 2-tert-Butylazo-2-cyanopropan, Dimethylazo-diisobutyrat, Azodiisobutyronitril, 2-tert-Butylazo-1-cyanocyclohexan, 1-tert-Amylazo-1-cyanocyclohexan. Weiterhin sind bevorzugt Alkylperketale wie 2,2-Bis-(tert-butylper-oxy)butan, Ethyl-3,3-bis(tert-butylperoxy)butyrat, 1,1-Di-(tert-butylperoxy)cyclohexan.

Bevorzugt wird der Katalysator B in Mengen von 0,05 bis 5 mol-% bezüglich der jeweiligen Vinylester einer Carbonsäure (V) eingesetzt.

Bevorzugt wird der Katalysator B in Mengen von 0,001 bis 10 mol-%, bezogen auf die phosphorhaltige Verbindung, eingesetzt.

Bevorzugt wird der Iniator B mit einer Geschwindigkeit von 0,01 bis 10 mol-% Katalysator pro Stunde, bezogen auf die phosphorhaltige Verbindung, zudosiert.

Bevorzugt wird der Katalysator B während der Reaktion kontinuierlich zudosiert.

Bevorzugt wird der Katalysator B während der Reaktion in Form einer Lösung in dem Olefin (IV) kontinuierlich zudosiert.

Bevorzugt wird der Katalysator B während der Reaktion in Form einer Lösung im verwendeten Lösungsmittel kontinuierlich zudosiert.

Geeignete Lösungsmittel sind die, wie sie weiter vorne in Verfahrensschritt a) eingesetzt werden.

Bevorzugt erfolgt die Umsetzung der Alkylphosphonigsäuren (II) mit einem Vinylester einer Carbonsäure (V) bei einer Temperatur von 0 bis 250 °C, besonders bevorzugt bei 20 bis 200 °C und insbesondere bei 50 bis 150 °C.

Bevorzugt besteht die Atmosphäre bei der Umsetzung mit mit einem Vinylester einer Carbonsäure (V) zu 50 bis 99,9 Gew.-% aus Bestandteilen des Lösungsmittels und Vinylester einer Carbonsäure (V), bevorzugt 70-95 %.

Bevorzugt erfolgt die Umsetzung während des Zusatz des Vinylesters einer Carbonsäure (V) bei einem Druck von 1-20 bar.

In einer weiteren Ausführungsform des Verfahrens wird das nach Verfahrensstufe
a) und/oder b) erhaltene Produktgemisch aufgearbeitet.

In einer weiteren Ausführungsform des Verfahrens wird das nach Verfahrensstufe
a) erhaltene Produktgemisch aufgearbeitet und danach die nach Verfahrensstufe
b) erhaltenen mono-funktionalisierten Dialkylphosphinsäuren und/oder deren Ester und Alkalisalze in Verfahrensstufe c) umgesetzt.

Die in Schritt c) beschriebene Umsetzung zur mono-hydroxyfunktionalisierten Dialkylphosphinsäure, deren Salze und Ester (III) wird durch saure oder alkalische Hydrolyse der mono-funktionalisierten Dialkylphosphinsäure, deren Salze oder Ester (VI) unter Verwendung von Säuren oder Basen in Gegenwart von Wasser erreicht.

Wird ein mono-funktionalisiertes Dialkylphosphinsäuresalz (III) erhalten, kann dieses mit einer Mineralsäure zur entsprechenden Säure umgesetzt und mit einem Alkohol M-OH oder M'-OH oder einem Alkylenoxid verestert werden.

Wird eine mono-hydroxyfunktionalisierte Dialkylphosphinsäure (III) erhalten, kann dieses mit einer Base zu einem mono-hydroxyfunktionalisierten Dialkylphosphinsäuresalz umgesetzt werden.

Geeignete Mineralsäuren sind beispielsweise Salzsäure, Schwefelsäure, Salpetersäure oder Phosphorsäure oder Mischungen der Säuren.

Geignete Basen sind Metalle, Metallhydride und Metallalkoholate wie zum Beispiel Lithium, Lithiumhydrid, Lithiumaluminiumhydrid, Methyllithium, Butyllithium, t-Butyllithium, Lithiumdiisopropylamid, Natrium, Natriumhydrid, Natriumborhydrid, Natriummethanolat, Natriumethanolat oder Natriumbutylat, Kaliummethanolat, Kaliumethanolat oder Kaliumbutylat und zudem Natriumhydroxid, Kaliumhydroxid, Lithiumhydroxid, Bariumhydroxid,

Bevorzugt kann die saure oder alkalische Hydrolyse in Gegenwart von Wasser und eines inerten Lösungsmittles erfolgen. Geeignete inerte Lösungsmittel sind die in Verfahrensschritt a) gennanten Lösungsmittel, bevorzugt sind niedermolekulare Alkohole mit 1 bis 6 Kohlenstoffatomen. Die Verwendung gesättigter, aliphatischer Alkohle ist besonders bevorzugt. Beispiele geeigneter Alkohle sind Methanol, Ethanol, Propanol, i-Propanol, Butanol, 2-Methyl-1-propanol, n-Pentanol, 2-Pentanol, 3-Pentanol, 2-Methyl-2-butanol, 3-Methyl-2-butanol, 2- Methyl-3-butanol, 3-Methyt-1-butanol oder 2-Methyl-1-butanol. Bevorzugte Basen (Katalysator C) zur Durchführung der alkalischen Hydrolyse sind Metalle, Metallhydride und Metallalkoholate wie zum Beispiel Lithium, Lithiumhydrid, Lithiumaluminiumhydrid, Methyllithium, Butyllithium, t-Butyllithium, Lithiumdiiso-propylamid, Natrium, Natriumhydrid, Natriumborhydrid, Natriummethanolat, Natriumethanolat oder Natriumbutylat, Kaliummethanolat, Kaliumethanolat oder Kaliumbutylat und zudem Natriumhydroxid, Kaliumhydroxid, Lithiumhydroxid, Bariumhydroxid und Ammoniumhydroxid. Bevorzugt werden Natriumhydroxid, Kaliumhydroxid und Bariumhydroxid eingesetzt.

Bevorzugte Mineralsäuren (Katalysator C) zur Druchführung der sauren Hydrolyse sind beispielsweise Schwefel-, Salpeter-, Salz,- Phosphorsäure oder Mischungen davon. Bevorzugt werden Schwefel- oder Salzsäure eingesetzt.

Bei der Durchführung der Hydrolyse ist die Gegenwart von Wasser wesentlich. Die Wassermenge kann von dem stöchiometrischen Bedarf als Mindestmenge bis zu einem Überschuss reichen.

Vorzugsweise erfolgt die Hydrolyse in einem Phosphor/Wasser-Molverhältnis von 1:1 bis 1:1.000, besonders bevorzugt von 1:1 bis 1:10.

Vorzugsweise erfolgt die Hydrolyse in einem Phosphor/Base bzw. Säure-Molverhältnis von 1:1 bis 1:300, besonders bevorzugt von 1,1 bis 1:20.

Die verwendete Alkoholmenge beträgt im Allgemeinen von 0,5 kg bis 1,5 kg pro kg der mono-funktionalisierten Dialkylphosphinsäure, deren Salze oder Ester (VI), bevorzugt von 0,6 kg bis 1,0 kg.

Die Reaktionstemperatur beträgt bevorzugt 50 °C bis 140 °C, bevorzugt von 80 °C bis 130 °C.

Bevorzugt erfolgt die Umsetzung bei einem Gesamtdruck von 1 bis 100 bar, besonders bevorzugt bei einem Gesamtdruck von 1 bis 10 bar.

Bevorzugt beträgt die Reaktionszeit 0,2 bis 20 Stunden, besonders bevorzugt 1 bis 12 Stunden.

Die mono-hydroxyfunktionalisierten Dialkylphosphinsäure oder deren Salz (III) kann im Folgenden zu weiteren Metallsalzen umgesetzt werden.

Bevorzugt handelt es sich bei den eingesetzten Metallverbindungen der Verfahrensstufe d) um Verbindungen der Metalle Mg, Ca, Al, Sb, Sn, Ge, Ti, Fe, Zr, Zn, Ce, Bi, Sr, Mn, Li, Na, K, besonders bevorzugt Mg, Ca, Al, Ti, Zn, Sn, Ce, Fe.

Geeignete Lösungsmittel für Verfahrensstufe d) sind die, wie sie weiter vorne in Verfahrensstufe a) eingesetzt werden.

Bevorzugt erfolgt die Umsetzung der in Verfahrensstufe d) in wässrigem Medium.

Bevorzugt setzt man in Verfahrensstufe d) die nach Verfahrensstufe c) erhaltenen erhaltene mono-hydroxyfunktionalisierten Dialkylphosphinsäuren, deren Ester und/oder Alkalisalze (III) mit Metallverbindungen von Mg, Ca, Al, Zn, Ti, Sn, Zr, Ce oder Fe zu den mono-hydroxyfunktionalisierten Dialkylphosphinsäuresalzen (III) dieser Metalle um.

Die Umsetzung erfolgt dabei in einem Molverhältnis von mono-hydroxyfunktionalisierter Dialkylphosphinsäure/-ester/-salz (III) zu Metall von 8 zu 1 bis 1 zu 3 (für vierwertige Metallionen oder Metalle mit stabiler vierwertiger Oxidationsstufe), von 6 zu 1 bis 1 zu 3 (für dreiwertige Metallionen oder Metalle mit stabiler dreiwertiger Oxidationsstufe), von 4 zu 1 bis 1 zu 3 (für zweiwertige Metallionen oder Metalle mit stabiler zweiwertiger Oxidationsstufe) und von 3 zu 1 bis 1 zu 4 (für einwertige Metallionen oder Metalle mit stabiler einwertiger Oxidationsstufe).

Bevorzugt führt man in Verfahrenstufe c) erhaltenes monohydroxyfunktionalisiertes Dialkylphosphinsäureesterl-salz (III) in die entsprechende Dialkylphosphinsäure über und setzt in Verfahrensstufe d) diese mit Metallverbindungen von Mg, Ca, Al, Zn, Ti, Sn, Zr, Ce oder Fe zu den monohydroxyfunktionalisierten Dialkylphosphinsäuresalzen (III) dieser Metalle um.

Bevorzugt wandelt man in Verfahrenstufe c) erhaltene monohydroxyfunktionalisierte Dialkylphosphinsäure/-ester (III) in ein Dialkylphosphinsäure-Alkalisalz um und setzt in Verfahrensstufe d) dieses mit Metallverbindungen von Mg, Ca, Al, Zn, Ti, Sn, Zr, Ce oder Fe zu den monohydroxyfunktionalisierten Dialkylphosphinsäuresalzen (III) dieser Metalle um.

Bevorzugt handelt es sich bei den Metallverbindungen von Mg, Ca, Al, Zn, Ti, Sn, Zr, Ce oder Fe für Verfahrenstufe d) um Metalle, Metalloxide, -hydroxide, -oxidhydroxide, -borate, -carbonate, -hydroxocarbonate, -hydroxocarbonathydrate, gemischte -hydroxocarbonate, - gemischte hydroxocarbonathydrate, -phosphate, -sulfate, -sulfat hydrate, -hydroxosulfathydrate, gemischte -hydroxosulfathydrate, -oxysulfate, -acetate, -nitrate, fluoride, -fluoridhydrate, -chloride, chloridhydrate, -oxychloride, -bromide, -iodide, -iodid hydrate, -carbonsäurederivate und/oder -alkoxide.

Bevorzugt handelt es sich bei den Metallverbindungen um Aluminiumchlorid, Aluminiumhydroxid, Aluminiumnitrat, Aluminiumsulfat, Titanylsulfat, Zinknitrat, Zinkoxid, Zinkhydroxid und/oder Zinksulfat.

Geeignet sind auch metallisches Aluminium, -fluorid, -hydroxychlorid, -bromid, -iodid, -sulfid, -selenid; -phosphid, -hypophosphit,-antimonid, -nitrid; -carbid, -hexafluorosilicat; -hydrid, -calciumhydrid, -borhydrid; -chlorat; Natrium-Aluminiumsulfat, Aluminium-Kaliumsulfat, Aluminiumammoniumsulfat, -nitrat, -metaphosphat, -phosphat, -silicat, -magnesiumsilicat, -carbonat, -hydrotalcit, -natriumcarbonat, -borat; -thiocyanat; -oxid, -oxidhydroxid, ihre entsprechenden Hydrate und/oder Polyaluminiumhydroxy-verbindungen, die vorzugsweise einen Aluminiumgehalt von 9 bis 40 Gew.-% besitzen.

Geeignet sind auch Aluminiumsalze von Mono-, Di-, Oligo-, Polycarbonsäuren wie z. B. Aluminiumdiacetat, -acetotartrat, -formiat, -lactat, -oxalat, -tartrat, -oleat, -palmitat, -sterarat, -trifluoromethansulfonat, -benzoat,-salicylat, -8-oxychinolat.

Geeignet sind ebenfalls elementares, metallisches Zink sowie Zinksalze wie z. B. Zinkhalogenide (Zinkfluorid, Zinkchloride, Zinkbromid, Zinkiodid).

Geeignet ist auchZinkborat, -carbonat,-hydroxidcarbonat, -silicat, -hexafluorosilicat, -stannat, -hydroxidstannat, -Magnesium-Aluminium-Hydroxidcarbonat; -nitrat, -nitrit, -phosphat, -pyrophosphat; -sulfat, -phosphid, -selenid, -tellurid und Zinksalze der Oxosäuren der siebten Hauptgruppe (Hypohalogenite, Halogenite, Halogenate, z. B. Zinkiodat, Perhalogenate, z. B. Zinkperchlorat); Zinksalze der Pseudohalogenide (Zinkthiocyanat, -cyanat, -cyanid); Zinkoxide, -peroxide, -hydroxide oder gemischte Zinkoxidhydroxide.

Bevorzugt sind Zinksalze der Oxosäuren der Übergangsmetalle (bspw. Zinkchromat(VI)hydroxyd, -chromit, -molybdat, -permanganat, -molybdat).

Geeignet sind auch Zinksalze von Mono-, Di-, Oligo-, Polycarbonsäuren, wie z. B. Zinkformiat, -acetat, -trifluoracetat, -propionat, -butyrat, -valerat, -caprylat, -oleat, -stearat, -oxalat, -tartrat, -citrat, -benzoat, -salicylat, -lactat, -acrylat, -maleat, -succinat, Salze von Aminosäuren (Glyzin), von sauren Hydroxyfunktionen (Zinkphenolat etc.), Zink-p-phenolsulfonat, -acetylacetonat, -stannat, -dimethyldithiocarbamat, -trifluormethansulfonat.

Bei den Titan-Verbindungen ist metallisches Titan ebenso wie Titan(III) und/oder (IV) -chlorid, -nitrat, -sulfat, -formiat, -acetat, -bromid, -fluorid, -oxychlorid, -oxysulfat, -oxid, -n-propoxid, -n-butoxid, -isopropoxid, -ethoxid, -2-ethylhexyloxid.

Geeignet ist auch metallisches Zinn sowie Zinnsalze (Zinn(II) und /oder (IV) -chlorid); Zinnoxide und Zinn-Alkoxid wie z. B. Zinn-(IV)-tert-butoxid.

Geeignet sind auch Cer(III)fluorid, -chlorid, -nitrat.

Bei den Zirkonium-Verbindungen ist metallisches Zirkonium sowie Zirkoniumsalze wie Zirkoniumchlorid, -sulfat, Zirconylacetat, Zirconylchlorid bevorzugt. Weiterhin bevorzugt sind Zirkonoxide sowie Zirkon-(IV)-tert-butoxid.

Bevorzugt erfolgt die Umsetzung in Verfahrensstufe d) bei einem Feststoffgehalt der mono-hydroxyfunktionalisierten Dialkylphosphinsäuresalze von 0,1 bis 70 Gew.-%, bevorzugt 5 bis 40 Gew.-%.

Bevorzugt erfolgt die Umsetzung in Verfahrensstufe e) bei einer Temperatur von 20 bis 250 °C, bevorzugt bei einer Temperatur von 80 bis 120 °C.

Bevorzugt erfolgt die Umsetzung in Verfahrensstufe d) bei einem Druck zwischen 0,01 und 1.000 bar, bevorzugt 0,1 bis 100 bar.

Bevorzugt erfolgt die Umsetzung in Verfahrensstufe d) während einer Reaktionszeit von 1*10⁻⁷ bis 1.000 h.

Bevorzugt wird das nach der Verfahrensstufe d) durch Filtrieren und/oder Zentrifugieren aus dem Reaktionsgemisch abgetrennte mono-hydroxyfunktionalisierte Dialkylphosphinsäuresalz (III) getrocknet.

Bevorzugt wird das nach Verfahrensstufe c) erhaltene Produktgemisch ohne weitere Reinigung mit den Metallverbindungen umgesetzt.

Bevorzugte Lösungsmittel sind die in Verfahrensschritt a) genannten Lösungsmittel.

Bevorzugt ist die Umsetzung in Verfahrensstufe c) und/oder d) im durch Stufe a) und/oder b) gegebenen Lösungsmittelsystem.

Bevorzugt ist die Umsetzung in Verfahrensstufe d) in einem modifizierten gegebenen Lösungsmittelsystem. Hierfür werden acide Komponenten, Lösevermittler, Schauminhibitoren etc. zugegeben.

In einer weiteren Ausführungsform des Verfahrens wird das nach Verfahrensstufe a), b) und/oder c) erhaltene Produktgemisch aufgearbeitet.

In einer weiteren Ausführungsform des Verfahrens wird das nach Verfahrensstufe c) erhaltene Produktgemisch aufgearbeitet und danach die nach Verfahrensstufe c) erhaltenen mono-hydroxyfunktionalisierten Dialkylphosphinsäuren und/oder deren Salze oder Ester (III) in Verfahrensstufe d) mit den Metallverbindungen umgesetzt.

Bevorzugt wird das Produktgemisch nach Verfahrensstufe c) aufgearbeitet, indem die mono-hydroxyfunktionalisierten Dialkylphosphinsäuren und/oder deren Salze oder Ester (III) urch Entfernen des Lösungsmittelsystems isoliert werden, z. B. durch Eindampfen.

Bevorzugt weist das mono-carboxyfunktionalisierte Dialkylphosphinsäuresalz (III) der Metalle Mg, Ca, Al, Zn, Ti, Sn, Zr, Ce oder Fe wahlweise eine Restfeuchte von 0,01 bis 10 Gew.-%, bevorzugt von 0,1 bis 1 Gew.-%, eine mittlere Teilchengröße von 0,1 bis 2.000 µm, bevorzugt von 10 bis 500 µm, eine Schüttdichte von 80 bis 800 g/l, bevorzugt von 200 bis 700 g/l, eine Rieselfähigkeit nach Pfrengle von 0,5 bis 10, bevorzugt von 1 bis 5, auf.

Besonders bevorzugt enthalten die Formkörper, -Filme, -Fäden und -Fasern 5 bis 30 Gew.-% der mono-hydroxyfunktionalisierte Dialkylphosphinsäure/-ester/-salze, hergestellt nach einem oder mehreren der Ansprüche 1 bis 12, 5 bis 90 Gew.-% Polymer oder Mischungen derselben, 5 bis 40 Gew.-% Additive und 5 bis 40 Gew.-% Füllstoff, wobei die Summe der Komponenten immer 100 Gew.-% beträgt.

Bevorzugt handelt es sich bei den Additiven um Antioxidantien, Antistatica, Treibmittel, weitere Flammschutzmittel, Hitzestabilisatoren, Schlagzähmodifikatoren, Prozesshilfsmittel, Gleitmittel, Lichtschutzmittel, Antidrippingmittel, Compatibilizer, Verstärkungsstoffe, Füllstoffe, Keimbildungsmittel, Nukleierungsmittel, Additive zur Lasermarkierung, Hydrolysestabilisatoren, Kettenverlängerer, Farbpigmente, Weichmacher und/oder Plastifizierungsmittel.

Bevorzugt ist ein Flammschutzmittel, enthaltend 0,1 bis 90 Gew.-% der mono-hydroxyfunktionalisierten Dialkylphosphinsäure, -ester und -salze (III) und 0,1 bis 50 Gew.-% weitere Additive, besonders bevorzugt Diole.

Bevorzugte Additive sind auch Aluminiumtrihydrat, Antimonoxid, bromierte aromatische oder cycloaliphatische Kohlenwasserstoffe, Phenole, Ether, Chlorparaffin, Hexachloro-cyclopentadien-Addukte, Roter Phosphor, Melaminderivate, Melamincyanurate, Ammoniumpolyphosphate und Magnesiumhydroxid. Bevorzugte Additive sind auch weitere Flammschutzmittel, insbesondere Salze von Dialkylphosphinsäuren.

Insbesondere betrifft die Erfindung die Verwendung der erfindungsgemäßen mono-hydroxyfunktionalisierten Dialkylphosphinsäure, -ester und -salze (III) als Flammschutzmittel bzw. als Zwischenstufe zur Herstellung von Flammschutzmitteln für thermo-plastische Polymere wie Polyester, Polystyrol oder Polyamid und für duroplastische Polymere wie ungesättigte Polyesterharze, Epoxidharze, Polyurethane oder Acrylate.

Geeignete Polyester leiten sich von Dicarbonsäuren und deren Ester und Diolen und/oder von Hydroxycarbonsäuren oder den entsprechenden Lactonen ab. Besonders bevorzugt wird Terephthalsäure und Ethylenglykol, Propan-1,3-diol und Butan-1,3-diol eingesetzt.

Geeignete Polyester sind u.a. Polyethylenterephthalat, Polybutylenterephthalat (Celanex^{®} 2500, Celanex^{®} 2002, Fa Celanese; Ultradur^{®}, Fa. BASF), Poly-1,4-dimethylolcyclohexanterephthalat, Polyhydroxybenzoate, sowie Block-Polyetherester, die sich von Polyethern mit Hydroxylendgruppen ableiten; ferner mit Polycarbonaten oder MBS modifizierte Polyester.

Synthetische lineare Polyester mit permanentem Flammschutz setzen sich aus Dicarbonsäure-Komponenten, Diol-Komponenten der erfindungsgemäßen monohydroxyfunktionalisierten Dialkylphosphinsäuren und -ester oder aus der nach dem erfindungsgemäßen Verfahren hergestellten mono-hydroxyfunktionalisierten Dialkylphosphinsäuren und -ester als Phosphor-enthaltende Kettenglieder zusammen. Die Phosphor enthaltenden Kettenglieder machen 2-20 % Gew.-% der Dicarbonsäure-Komponente des Polyesters aus. Bevorzugt beträgt der resultierende Phosphorgehalt im Polyester 0,1-5%, besonders bevorzugt 0,5-3% Gew.-%.

Die folgenden Schritte können mit oder unter Zugabe der erfindungsgemäß hergestellten Verbindungen ausgeführt werden.

Bevorzugt wird zur Herstellung der Formmasse ausgehend von den freien Dicarbonsäure und Diolen zunächst direkt verestert und dann polykondensiert.

Bevorzugt wird ausgehend von Dicarbonsäureestern, insbesondere Dimethylestern, zunächst umgeestert und dann unter Verwendung der hierfür üblichen Katalysatoren polykondensiert.

Bevorzugt können bei der Polyesterherstellung neben den gängigen Katalysatoren auch übliche Additive (Vernetzungsmittel, Mattierungs- und Stabilisierungsmittel, Nukleierungsmittel, Farb- und Füllstoffe etc.) zugesetzt werden.

Bevorzugt findet die Veresterung und/oder Umesterung bei der Polyesterherstellung bei Temperaturen von 100 - 300 °C statt, besonders bevorzugt bei 150 - 250 °C.

Bevorzugt findet die Polykondensation bei der Polyesterherstellung bei Drücken zwischen 0,1 bis 1,5 mbar und Temperaturen von 150 - 450 °C statt, besonders bevorzugt bei 200 - 300 °C.

Die erfindungsgemäß hergestellten flammgeschützten Polyester-Formmassen werden bevorzugt in Polyester-Formkörpern eingesetzt.

Bevorzugte Polyester-Formkörper sind Fäden, Fasern, Folien und Formkörper, die als Dicarbonsäure-Komponente hauptsächlich Terephthalsäure und als Diolkomponente hauptsächlich Ethylenglykol enthalten.

Bevorzugt beträgt der resultierende Phosphorgehalt in aus flammgeschützten Polyester hergestellten Fäden und Fasern 0,1 - 18, bevorzugt 0,5 - 15 und bei Folien 0,2 - 15, bevorzugt 0,9 -12 Gew.-%.

Geeignete Polystyrole sind Polystyrol, Poly-(p-methylstyrol) und/oder Poly-(alpha-methylstyrol).

Bevorzugt handelt es sich bei den geeigneten Polystyrolen um Copolymere von Styrol oder alpha-Methylstyrol mit Dienen oder Acrylderivaten, wie z. B. Styrol-Butadien, Styrol-Acrylnitril, Styrol-Alkylmethacrylat, Styrol-Butadien-Alkylacrylat und -methacrylat, Styrol-Maleinsäureanhydrid, Styrol-Acrylnitril-Methylacrylat; Mischungen von hoher Schlagzähigkeit aus Styrol-Copolymeren und einem anderen Polymer, wie z. B. einem Polyacrylat, einem Dien-Polymeren oder einem Ethylen-Propylen-Dien-Terpolymeren; sowie Block-Copolymere des Styrols, wie z. B. Styrol-Butadien-Styrol, Styrol-Isopren-Styrol, Styrol-Ethylen/Butylen-Styrol oder Styrol-Ethylen/Propylen-Styrol.

Bevorzugt handelt es sich bei den geeeigneten Polystyrolen auch um Pfropfcopolymere von Styrol oder alpha-Methylstyrol, wie z. B. Styrol auf Polybutadien, Styrol auf Polybutadien-Styrol- oder Polybutadien-Acrylnitril-Copolymere, Styrol und Acrylnitril (bzw. Methacrylnitril) auf Polybutadien; Styrol, Acrylnitril und Methylmethacrylat auf Polybutadien; Styrol und Maleinsäureanhydrid auf Polybutadien; Styrol, Acrylnitril und Maleinsäureanhydrid oder Maleinsäureimid auf Polybutadien; Styrol und Maleinsäureimid auf Polybutadien, Styrol und Alkylacrylate bzw. Alkylmethacrylate auf Polybutadien, Styrol und Acrylnitril auf Ethylen-Propylen-Dien-Terpolymeren, Styrol und Acrylnitril auf Polyalkylacrylaten oder Polyalkylmethacrylaten, Styrol und Acrylnitril auf Acrylat-Butadien-Copolymeren, sowie deren Mischungen, wie sie z. B. als so genannte ABS-, MBS-, ASA- oder AES-Polymere bekannt sind.

Bevorzugt handelt es sich bei den Polymeren um Polyamide und Copolyamide, die sich von Diaminen und Dicarbonsäuren und/oder von Aminocarbonsäuren oder den entsprechenden Lactamen ableiten, wie Polyamid 2,12, Polyamid 4, Polyamid 4,6, Polyamid 6, Polyamid 6,6, Polyamid 6,9, Polyamid 6,10, Polyamid 6,12, Polyamid 6,66, Polyamid 7,7, Polyamid 8,8, Polyamid 9,9, Polyamid 10,9, Polyamid 10,10 , Polyamid 11, Polyamid 12, usw. Solche Polyamide sind z. B unter den Handelsnamen Nylon^{®}, Fa. DuPont, Ultramid^{®}, Fa. BASF, Akulon^{®} K122, Fa. DSM, Zytel^{®} 7301, Fa. DuPont; Durethan^{®} B 29, Fa. Bayer und Grillamid^{®}, Fa. Ems Chemie bekannt.

Geeignet sind auch aromatische Polyamide ausgehend von m-Xylol, Diamin und Adipinsäure; Polyamide, hergestellt aus Hexamethylendiamin und Iso- und/oder Terephthalsäure und gegebenenfalls einem Elastomer als Modifikator, z. B. Poly2,4,4-trimethylhexamethylen-terephthalamid oder Poly-m-phenylenisophthalamid, Blockcopolymere der vorstehend genannten Polyamide mit Polyolefinen, Olefin-Copolymeren, lonomeren oder chemisch gebundenen oder gepfropften Elastomeren, oder mit Polyethern, wie z. B. mit Polyethylenglykol, Polypropylenglykol oder Polytetramethylenglykol. Ferner mit EPDM oder ABS modifizierte Polyamide oder Copolyamide; sowie während der Verarbeitung kondensierte Polyamide ("RIM-Polyamidsysteme").

Die mono-hydroxyfunktionalisierte Dialkylphosphinsäure/-ester/-salze, hergestellt nach einem oder mehreren der Ansprüche 1 bis 10 werden bevorzugt in Formmassen angewendet, die weiter zur Erzeugung von Polymer-Formkörpern eingesetzt werden.

Besonders bevorzugt enthält die flammgeschützte Formmasse 5 bis 30 Gew.-% mono-hydroxyfunktionalisierte Dialkylphosphinsäuren, -salze oder -ester, die nach einem oder mehreren der Ansprüche 1 bis 10 hergestellt wurden, 5 bis 90 Gew.-% Polymer oder Mischungen derselben, 5 bis 40 Gew.-% Additive und 5 bis 40 Gew.-% Füllstoff, wobei die Summe der Komponenten immer 100 Gew.-% beträgt.

Die Erfindung betrifft auch Flammschutzmittel, die die monohydroxyfunktionalisierte Dialkylphosphinsäuren, -salze oder -ester, die nach einem oder mehreren der Ansprüche 1 bis 10 hergestellt wurden enthalten.

Außerdem betrifft die Erfindung Polymer-Formmassen sowie Polymer-Formkörper, -Filme, -Fäden und -Fasern, enthaltend die erfindungsgemäß hergestellten mono-hydroxyfunktionalisierten Dialkylphosphinsäuresalze (III) der Metalle Mg, Ca, Al, Zn, Ti, Sn, Zr, Ce oder Fe.

Die Erfindung wird durch die nachstehenden Beispiele erläutert.

Herstellung, Verarbeitung und Prüfung von flammgeschützten Polymerformmassen und flammgeschützten Polymerformkörpern

Die Flammschutzkomponenten werden mit dem Polymergranulat und evtl. Additiven vermischt und auf einem Doppelschnecken-Extruder (Typ Leistritz LSM^{®} 30/34) bei Temperaturen von 230 bis 260 °C (PBT-GV) bzw. von 260 bis 280 °C (PA 66-GV) eingearbeitet. Der homogenisierte Polymerstrang wurde abgezogen, im Wasserbad gekühlt und anschließend granuliert.

Nach ausreichender Trocknung wurden die Formmassen auf einer Spritzgießmaschine (Typ Aarburg Allrounder) bei Massetemperaturen von 240 bis 270 °C (PBT-GV) bzw. von 260 bis 290 °C (PA 66-GV) zu Prüfkörpern verarbeitet. Die Prüfkörper werden anhand des UL 94-Tests (Underwriter Laboratories) auf Flammwidrigkeit (Flammschutz) geprüft und klassifiziert.

An Prüfkörpern aus jeder Mischung wurden die Brandklasse UL 94 (Underwriter Laboratories) an Probekörpern der Dicke 1,5 mm bestimmt.

Nach UL 94 ergeben sich folgende Brandklassen:
V-0 kein Nachbrennen länger als 10 sec, Summe der Nachbrennzeiten bei 10 Beflammungen nicht größer als 50 sec, kein brennendes Abtropfen, kein vollständiges Abbrennen der Probe, kein Nachglühen der Proben länger als 30 sec nach Beflammungsende
V-1 kein Nachbrennen länger als 30 sec nach Beflammungsende, Summe der Nachbrennzeiten bei 10 Beflammungen nicht größer als 250 sec, kein Nachglühen der Proben länger als 60 sec nach Beflammungsende, übrige Kriterien wie bei V-0 V-2 Zündung der Watte durch brennendes Abtropfen, übrige Kriterien wie bei V-1 nicht klassifizierbar (nkl) erfüllt nicht die Brandklasse V-2.

Bei einigen untersuchten Proben wurde außerdem der LOI-Wert gemessen. Der LOI-Wert (Limiting Oxygen Index) wird nach ISO 4589 bestimmt. Nach ISO 4589 entspricht der LOI der geringsten Sauerstoffkonzentration in Volumen-prozent, die in einer Mischung von Sauerstoff und Stickstoff gerade noch die Verbrennung des Kunststoffs unterhält. Je höher der LOI-Wert, desto schwerer entflammbar ist das geprüfte Material.

| | | |
|---|---|---|
| LOI | 23 | brennbar |
| LOI | 24-28 | bedingt brennbar |
| LOI | 29-35 | flammwidrig |
| LOI | >36 | besonders flammwidrig |

### Eingesetzte Chemikalien und Abkürzungen

- VE-Wasser: voll-entsalztes Wasser
- AIBN: Azo-bis-(isobutyronitril), (Fa. WAKO Chemicals GmbH)
- WakoV65: 2,2'-Azobis(2,4-dimethyl-valeronitril), (Fa. WAKO Chemicals GmbH)
- Deloxan^{®} THP II: Metallfänger (Fa. Evonik Industries AG)

### Beispiel 1

Bei Raumtemperatur werden in einem Dreihalskolben mit Rührer und Intensivkühler 188 g Wasser vorgelegt und unter Rühren und Durchleiten von Stickstoff entgast. Dann werden unter Stickstoff 0,2 mg Palladium(II)sulfat und 2,3 mg Tris(3-sulfo-phenyl)phosphin Trinatriumsalz hinzugegeben und gerührt, dann 66 g Phosphinsäure in 66 Wasser zugegeben. Die Reaktionslösung wird in einen 2 I-Büchi-Reaktor überführt und unter Rühren und unter Druck mit Ethylen beschickt und das Reaktionsgemisch auf 80 °C geheizt. Nach einer Ethylenaufnahme von 28 g wird abgekühlt und freies Ethylen abgelassen. Das Reaktionsgemisch wird am Rotationsverdampfer vom Lösungsmittel befreit. Der Rückstand wird mit 100 g VE-Wasser versetzt und bei Raumtemperatur unter Stickstoffatmosphäre gerührt, dann filtriert und das Filtrat mit Toluol extrahiert, danach wird am Rotationsverdampfer vom Lösungsmittel befreit und die erhaltene Ethylphosphonigsäure aufgefangen. Man erhält so 92 g (98 % der Theorie) Ethylphosphonigsäure.

### Beispiel 2

Wie in Beispiel 1 werden 99 g Phosphinsäure, 396 g Butanol, 42 g Ethylen, 6,9 mg Tris(dibenzylidenaceton)dipalladium, 9,5 mg 4,5-Bis(diphenylphosphino)-9,9-dimethylxanthen umgesetzt, dann zur Reinigung über eine mit Deloxan^{®} THP II beschickte Säule gegeben und danach nochmal n-Butanol zugegeben. Bei einer Reaktionstemperatur von 80 - 110 °C wird das gebildete Wasser durch Azeotropdestillation entfernt. Das Produkt (Ethylphosphonigsäurebutylester) wird durch Destillation bei vermindertem Druck gereinigt. Man erhält so 189 g (84 % der Theorie) Ethylphosphonigsäurebutylester.

### Beispiel 3

Wie in Beispiel 1 werden 198 g Phosphinsäure, 198 g Wasser, 84 g Ethylen, 6,1 mg Palladium(II)sulfat, 25,8 mg 9,9-Dimethy)-4,5-bis(diphenylphosphino)-2,7-sulfonato-xanthen Dinatriumsalz umgesetzt, dann zur Reinigung über eine mit Deloxan^{®} THP II beschickte Säule gegeben und danach n-Butanol zugegeben. Bei einer Reaktions-temperatur von 80 - 110 °C wird das gebildete Wasser durch Azeotropdestillation entfernt. Das Produkt (Ethylphosphonigsäurebutylester) wird durch Destillation bei vermindertem Druck gereinigt. Man erhält so 374 g (83 % der Theorie) Ethylphosphonigsäurebutylester.

### Beispiel 4

In einem 500 ml-Fünfhalskolben mit Gaseinleitungsrohr, Thermometer, Intensivrührer und Rückflusskühler mit Gasverbrennung werden 94 g (1 mol) Ethylphosphonigsäure (hergestellt wie in Beispiel 1) vorgelegt. Bei Raumtemperatur wird Ethylenoxid eingeleitet. Unter Kühlung wird eine Reaktionstemperatur von 70 °C eingestellt und noch eine Stunde bei 80 °C nachreagiert. Die Ethylenoxidaufnahme beträgt 65,7 g. Die Säurezahl des Produktes ist kleiner 1 mg KOH/g. Es werden 129 g (94 % der Theorie) (Ethylphosphonigsäure-2-hydroxyethylester) als farbloses, wasserklares Produkt erhalten.

### Beispiel 5

564 g (6 mol) Ethylphosphonigsäure werden in 860 g Wasser gelöst und in einen 5 I-Fünfhalskolben mit Thermometer, Rückflusskühler, Intensivrührer und Tropftrichter vorgelegt. Nach Aufheizen der Reaktionsmischung auf 100 °C wird bei Normaldruck innerhalb von 1 h 602 g (7 mol) Vinylacetat und 500 g einer 5 %igen Natriumperoxodisulfat-Lösung (1,5 mol-% bzgl. Vinylacetat) zugetropft. Anschließend wird das Wasser im Vakuum abdestilliert. Der Rückstand wird in Tetrahydrofuran aufgenommen und die unlöslichen Salze abfiltriert. Das Lösungsmittel des Filtrats wird im Vakuum abgetrennt. Nach chromatographischer Reinigung werden 1026 g (95 % der Theorie) Ethyl-(2-acetoxyethyl)-phosphinsäure als Öl erhalten.

### Beispiel 6

94 g (1 mol) Ethylphosphonigsäure (hergestellt wie in Beispiel 1) und 86 g (1 mol) Vinylacetat werden in 200 g Butanol in einen Vierhalsrundkolben mit Rührer, Rückflusskühler, Thermometer und Stickstoffeinlass in 200 ml Ethanol vorgelegt und erwärmt. Innerhalb von 1 h werden bei ca. 100 °C 98,4 g einer 5 %-igen Lösung von AIBN in Ethanol zugetropft. Danach wurde das Lösungmittel im Vakuum abdestilliert. Nach chromatographischer Reinigung werden 215 g (91 % der Theorie) Ethyl-(2-acetoxyethyl)-phosphinsäure erhalten.

### Beispiel 7

150 g (1 mol) des Ethylphosphonigsäurebutylesters, hergestellt nach Beispiel 2 und 137 g (1,2 mol) Vinylbutyrat in 217 g Toluol werden auf ca. 100 °C erwärmt. Unter Rühren werden 124 g einer 10 %-igen Lösung von WakoV65 in Toluol zudosiert. Das Lösungsmittel wird im Vakuum abdestilliert. Nach chromatographischer Reinigung werden 227 g (86 % der Theorie) Ethyl-(2-butyroxyethyl)-phosphinsäurebutylester erhalten.

### Beispiel 8

In einer Rührapparatur werden 180 g (1 mol) Ethyl-(2-acetoxyethyl)-phosphinsäure (hergestellt wie in Beispiel 6) in 200 ml (2 mol) konzentierter Salzsäure gelöst. Das Gemisch wurde unter guter Rührung auf ca. 90 °C erwärmt und bei dieser Temperatur etwa 8 Stunden reagieren gelassen. Anschließend wird das Wasser im Vakuum vollständig abdestilliert. Der Rückstand wird in Essigsäure aufgenommen und extrahiert. Das Lösungsmittel des Filtrats wird im Vakuum abgetrennt. Es werden 143 g (94 % der Theorie) Ethyl-(2-hydroxyethyl)-phosphinsäure als Öl erhalten.

### Beispiel 9

In einer Rührapparatur legt man 150 g Butanol, 65 g Wasser, 150 g (3,75 mol) Natriumhydroxid und 330 g (1,25 mol) Ethyl-(2-butyroxyethyl)-phosphinsäurebutylester (hergestellt wie in Beispiel 7) vor. Das Gemisch wurde unter guter Rührung auf ca. 120 °C erwärmt und bei dieser Temperatur etwa 6 Stunden reagieren gelassen. Anschließend wurden 250 ml Wasser zugegeben und das Butanol destillativ aus dem Reaktionsgemisch entfernt. Nach Zugabe von weiteren 500 ml Wasser wurde das Gemisch durch Zugabe von etwa 184 g (1,88 mol) konzentrierter Schwefelsäure neutralisiert. Anschließend wird das Wasser im Vakuum abdestilliert. Der Rückstand wird in Tetrahydrofuran aufgenommen und extrahiert. Die unlöslichen Salze werden abfiltriert. Das Lösungsmittel des Filtrats wird im Vakuum. Es werden 220 g (98 % der Theorie) Ethyl-(2-hydroxyethyl)-phosphinsäure als Öl erhalten.

### Beispiel 10

828 g (6 mol) Ethyl-(2-hydroxyethyl)-phosphinsäure (hergestellt wie in Beispiel 8) werden in 860 g Wasser gelöst und in einem 5 I-Fünfhalskolben mit Thermometer, Rückflusskühler, Intensivrührer und Tropftrichter vorgelegt und mit ca. 480 g (6 mol) 50 %ige Natriumhydroxid-Lösung neutralisiert. Bei 85 °C wird eine Mischung von 1291 g einer 46 %igen wässrigen Lösung von Al₂(SO₄)₃·14H₂O zugefügt. Anschließend wird der erhaltene Feststoff abfiltriert, mit heißem Wasser gewaschen und bei 130 °C im Vakuum getrocknet. Ausbeute: 803 g (91 % der Theorie) Ethyl-(2-hydroxyethyl)-phosphinsäure Aluminium(III)salz als farbloses Salz.

### Beispiel 11

138 g (1 mol) Ethyl-(2-hydroxyethyl)-phosphinsäure (hergestellt wie in Beispiel 9) und 85 g Titantetrabutylat werden in 500 ml Toluol 40 Stunden unter Rückfluss erhitzt. Dabei entstehendes Butanol wird mit Anteilen an Toluol von Zeit zu Zeit abdestilliert. Die entstandene Lösung wird anschließend vom Lösungsmittel befreit. Man erhält 136 g (91 % der Theorie) Ethyl-(2-hydroxyethyl)-phosphinsäure Titansalz.

### Beispiel 12

414 g (3 mol) Ethyl-(2-hydroxyethyl)-phosphinsäure (hergestellt wie in Beispiel 8) werden bei 85 °C in 400 ml Toluol gelöst und mit 888 g (12 mol) Butanol versetzt. Bei einer Reaktionstemperatur von ca. 100 °C wird das gebildete Wasser durch Azeotropdestillation entfernt. Man erhält 500 g (86% der Theorie) Ethyl-(2-hydroxyethyl)-phosphinsäurebutylester durch Destillation bei vermindertem Druck gereinigt.

### Beispiel 13

414 g (3,0 mol) Ethyl-(2-hydroxyethyl)-phosphinsäure (hergestellt wie in Beispiel 9) werden bei 80 °C in 400 ml Toluol gelöst und mit 594 g (6,6 mol) 1,4-Butandiol versetzt und in einer Destillationsapparatur mit Wasserabscheider bei ca. 100 °C während 4 h verestert. Nach beendeter Veresterung wird das Toluol im Vakuum abgetrennt. Es werden 504 g (80 % der Theorie) Ethyl-(2-hydroxyethyl)-phosphinsäure-4-hydroxybutylester als farbloses Öl erhalten.

### Beispiel 14

Zu 388 g (2 mol) Ethyl-(2-hydroxyethyl)-phosphinsäurebutylester (hergestellt wie in Beispiel 12) werden 155 g (2,5 mol) Ethylenglycol und 0,4 g Kaliumtitanyloxalat hinzugegeben und 2 h bei 200 °C gerührt. Durch langsames Evakuieren werden leicht flüchtige Anteile abdestilliert. Es werden 315 g (96% der Theorie) Ethyl-(2-hydroxyethyl)-phosphinsäure-2-hydroxyethylester erhalten.

### Beispiel 15

In einem 500 ml-Fünfhalskolben mit Gaseinleitungsrohr, Thermometer, Intensivrührer und Rückflusskühler mit Gasverbrennung werden 138 g (1 mol) Ethyl-(2-hydroxyethyl)-phosphinsäure (hergestellt wie in Beispiel 8) vorgelegt. Bei Raumtemperatur wird Ethylenoxid eingeleitet. Unter Kühlung wird eine Reaktionstemperatur von 70 °C eingestellt und noch eine Stunde bei 80 °C nachreagiert. Die Ethylenoxidaufnahme beträgt 64,8 g. Die Säurezahl des Produktes ist kleiner 1 mg KOH/g. Es werden 173 g (95 % der Theorie) Ethyl-(2-hydroxyethyl)-phosphinsäure-2-hydroxyethylester ein farbloses, wasserklare Flüssigkeit erhalten.

### Beispiel 16

Es werden zu 18,2 g Ethyl-(2-hydroxyethyl)-phosphinsäure-2-hydroxyethylester (hergestellt wie in Beispiel 14) 290 g Terephthalsäure, 188 g Ethylenglycol, 0,34 g Zinkacetat gegeben und 2 h auf 200 °C erhitzt. Dann werden 0,29 g Trinatriumphosphatanhydrat und 0,14 g Antimon(III)oxid hinzugegeben, auf 280 °C erhitzt und danach evakuiert.

Aus der erhaltenen Schmelze (349 g, Phosphorgehalt 0,9 %) werden Probekörper der Dicke 1,6 mm für die Messung des Sauerstoffindexes (LOI) nach ISO 4589- 2 als auch für den Brandtest UL 94 (Underwriter Laboratories) gespritzt.

Die so hergestellten Probekörper ergaben einen LOI von 40 % O₂ und erfüllten nach UL 94 die Brandklasse V-0. Entsprechende Probekörper ohne Ethyl-(2-hydroxyethyl)-phosphinsäure-2-hydroxyethylester ergaben einen LOI von nur 31 % O₂ und erfüllten nach UL 94 nur die Brandklasse V-2. Der Ethyl-(2-hydroxyethyl)-phosphinsäure-2-hydroxyethylester enthaltende Polyester Formkörper zeigt damit eindeutig flammschützende Eigenschaften.

### Beispiel 17

Zu 11,6 g Ethyl-(2-hydroxyethyl)-phosphinsäure (hergestellt wie in Beispiel 9) werden 12,9 g 1,3-Propylenglycol zugegeben und bei 160 °C das bei der Veresterung gebildete Wasser abgezogen. Dann werden 378 g Dimethylterephthalat, 152 g 1,3-Propandiol, 0,22 g Tetrabutylitanat und 0,05 g Lithiumacetat zugegeben und die Mischung zunächst 2 h unter Rühren auf 130 bis 180 °C erhitzt, danach bei Unterdruck auf 270 °C. Das Polymer (431 g) enthält 0,6 % Phosphor, der LOI beträgt 34.

### Beispiel 18

Zu 11,6 g Ethyl-(2-hydroxyethyl)-phosphinsäure (hergestellt wie in Beispiel 8) werden 367 g Dimethylterephthalat, 170 g 1,4-Butandiol, 0,22 g Tetrabutylitanat und 0,05 g Lithiumacetat zugegeben und die Mischung zunächst 2 h lang unter Rühren auf 130 bis 180 °C erhitzt, danach bei Unterdruck auf 270 °C. Das Polymer (424 g) enthält 0,6 % Phosphor, der LOI beträgt 34, der von unbehandeltem Polybutylenterephthalat 23.

### Beispiel 19

In einem 250 ml Fünfhalskolben mit Rückflusskühler, Rührer, Thermometer und Stickstoffeinleitung werden 100 g eines Bisphenol-A-bisglycidethers mit einem Epoxidwert von 0,55 mol/100 g (Beckopox EP 140, Fa. Solutia) und 17,9 g (0,13 mol) Ethyl-(2-hydroxyethyl)-phosphinsäure (hergestellt analog Beispiel 8) unter Rühren auf maximal 150 °C erhitzt. Nach 30 min ergibt sich eine klare Schmelze. Nach einer weiteren Stunde Rühren bei 150 °C wird die Schmelze abgekühlt und gemörsert. Man erhält 116,4 g eines weißen Pulvers mit einem Phosphorgehalt von 3,3 Gew.-%.

### Beispiel 20

In einem 2 I-Kolben mit Rührer, Wasserabscheider, Thermometer, Rückflusskühler und Stickstoffeinleitung werden 29,4 g Phthalsäureanhydrid, 19,6 g Maleinsäureanhydrid, 24,8 g Propylenglycol, 14,4 g Ethyl-(2-hydroxyethyl)-phosphinsäure-2-hydroxyethylester (hergestellt wie in Beispiel 15) 20 g Xylol und 50 mg Hydrochinon unter Rühren und Durchleiten von Stickstoff auf 100 °C erhitzt. Bei Einsetzen der exothermen Reaktionwird die Heizung entfernt. Nach Abklingen der Reaktion wird weiter bei ca. 190 °C gerührt. Nachdem 14 g Wasser abgeschieden sind, wird das Xylol abdestilliert und die Polymerschmelze abgekühlt. Man erhält 89,6 g eines weißen Pulvers mit einem Phosphorgehalt von 2,3 Gew.-%.

### Beispiel 21

Eine Mischung von 50 Gew.-% Polybutylenterephthalat, 20 Gew.-% Ethyl-(2-hydroxyethyl)-phosphinsäure Aluminium(III)salz (hergestellt wie in Beispiel 10) und 30 Gew.-% Glasfasern werden auf einem Doppelschnecken-Extruder (Typ Leistritz LSM 30/34) bei Temperaturen von 230 bis 260 °C zu einer Polymerformmasse compoundiert. Der homogenisierte Polymerstrang wurde abgezogen, im Wasserbad gekühlt und anschließend granuliert.

Nach Trocknung werden die Formmassen auf einer Spritzgießmaschine (Typ Aarburg Allrounder) bei 240 bis 270 °C zu Polymerformkörper verarbeitet und eine UL-94 Klassifizierung von V-0 bestimmt.

### Beispiel 22

Eine Mischung von 53 Gew.-% Polyamid 6.6, 30 Gew.-% Glasfasern, 17 Gew.-% Ethyl-(2-hydroxyethyl)-phosphinsäure Titansalz (hergestellt wie in Beispiel 11) werden auf einem Doppelschnecken-Extruder (Typ Leistritz LSM 30/34) zu Polymerformmassen compoundiert. Der homogenisierte Polymerstrang wurde abgezogen, im Wasserbad gekühlt und anschließend granuliert.

Nach Trocknung werden die Formmassen auf einer Spritzgießmaschine (Typ Aarburg Allrounder) bei 260 bis 290 °C zu Polymerformkörpern verarbeitet und eine UL-94 Klassifizierung von V-0 erhalten.

## Patentansprüche

1. Verfahren zur Herstellung von mono-hydroxyfunktionalisierten Dialkylphosphinsäuren, -estern und -salzen, **dadurch gekennzeichnet, dass** man
a) eine Phosphinsäurequelle (I) 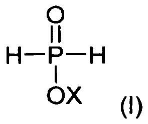 mit Olefinen (IV) 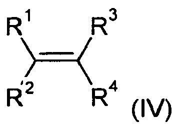 in Gegenwart eines Katalysators A zu einer Alkylphosphonigsäure, deren Salz oder Ester (II) 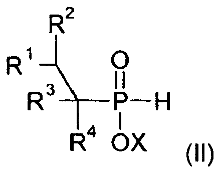 umsetzt,
b) die so entstandene Alkylphosphonigsäure, deren Salz oder Ester (II) mit einem Vinylester einer Carbonsäure (V) 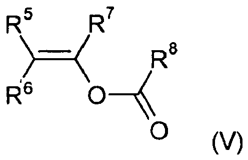 in Gegenwart eines Katalysators B zum mono-funktionalisierten Dialkylphosphinsäurederivat (VI) umsetzt und 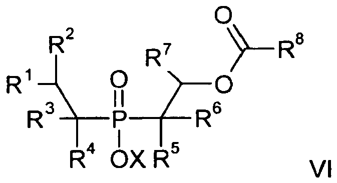
c) das mono-funktionalisierten Dialkylphosphinsäurederivat (VI) in Gegenwart eines Katalysators C zum mono-funktionalisierten Dialkylphosphinsäurederivat (III) 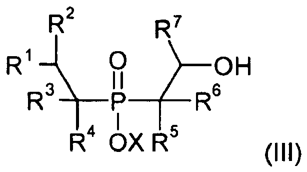 umsetzt oder die nach Schritt a) erhaltene Alkylphosphonigsäure, deren Salz oder Ester (II) und/oder die nach Schritt b) erhaltene mono-funktionalisierte Dialkylphosphinsäure, deren Salz oder Ester (VI) und/oder die nach Schritt c) erhaltene mono-hydroxyfunktionalisierte Dialkylphosphinsäure, deren Salz oder Ester (III) und/oder die jeweils resultierende Reaktionslösung davon mit einem Alkylenoxid oder einem Alkohol M-OH und/oder M'-OH verestert, und den jeweils entstandenen Alkylphosphonigsäureester (II), mono-funktionalisierten Dialkylphosphinsäurester (VI) und/oder mono-hydroxyyfunktionalisierten Dialkylphosphinsäureester (III) den weiteren Reaktionsschritten b) oder c) unterwirft, wobei R¹, R², R³, R⁴, R⁵, R⁶, R⁷, R⁸ gleich oder verschieden sind und unabhängig voneinander H, C₁-C₁₈-Alkyl, C₆-C₁₈-Aryl, C₆-C₁₈-Aralkyl, C₆-C₁₈-Alkyl-Aryl, CN, CHO, OC(O)CH₂CN, CH(OH)C₂H₅, CH₂CH(OH)CH₃, 9-Anthracen, 2-Pyrrolidon, (CH₂)ₘOH, (CH₂)ₘNH₂, (CH₂)ₘNCS, (CH₂)ₘNC(S)NH₂, (CH₂)mSH, (CH₂)ₘS-2-thiazolin, (CH₂)ₘSiMe₃, C(O)R⁹, CH=CHR⁹ und/oder CH=CH-C(O)R⁹ bedeuten und wobei die Gruppen C₆-C₁₈-Aryl, C₆-C₁₈-Aralkyl und C₆-C₁₈-Alkyl-Aryl mit C(O)CH₃, OH, CH₂OH, NH₂, NO₂, OCH₃, SH und/oder OC(O)CH₃ substituiert sein können und wobei R⁹ für C₁-C₈-Alkyl oder C₆-C₁₈-Aryl steht und m eine ganze Zahl von 0 bis 10 bedeutet und X für H, C₁-C₁₈-Alkyl, C₆-C₁₈-Aryl, C₆-C₁₈-Aralkyl, C₆-C₁₈-Alkyl-Aryl, (CH₂)ₖOH, CH₂-CHOH-CH₂OH, (CH₂)ₖO(CH₂)ₖH, (CH₂)ₖ-CH(OH)-(CH₂)ₖH, (CH₂-CH₂O)ₖH, (CH₂-C[CH₃]HO)ₖH, (CH₂-C[CH_{3]}HO)ₖ(CH₂-CH₂O)ₖH, (CH₂-CH₂O)ₖ(CH₂-C[CH₃]HO)H, (CH₂-CH₂O)ₖ-alkyl, (CH₂-C[CH₃]HO)ₖ-alkyl, (CH₂-C[CH₃]HO)ₖ(CH₂-CH₂O)ₖ-alkyl, (CH₂-CH₂O)ₖ(CH₂-C[CH₃]HO)O-alkyl, (CH₂)ₖ-CH=CH(CH₂)ₖH, (CH₂)ₖNH₂ und/oder (CH₂)ₖN[(CH₂)ₖH]₂ steht, wobei k eine ganze Zahl von 0 bis 10 bedeutet und/oder für Mg, Ca, Al, Sb, Sn, Ge, Ti, Fe, Zr, Zn, Ce, Bi, Sr, Mn, Cu, Ni, Li, Na, K, H und/oder eine protonierte Stickstoffbase stehen und es sich bei dem Katalysatoren A um Übergangsmetalle und/oder Übergangsmetallverbindungen und/oder Katalysatorsysteme handelt, die sich aus einem Übergangsmetall und/oder einer Übergangsmetallverbindung und mindestens einem Liganden zusammensetzen und es sich bei dem Katalysator B um Peroxide bildende Verbindungen und/oder Peroxoverbindungen und/oder um Azo-Verbindungen und es sich bei dem Katalysator C um eine Säure oder eine Base handelt.

2. Verfahren nach Anspruch 1, **dadurch gekennzeichnet, dass** man die nach Schritt c) erhaltene mono-hydroxyfunktionalisierten Dialkylphosphinsäure, deren Salz oder Ester (III) anschließend in einem Schritt d) mit Metallverbindungen von Mg, Ca, Al, Sb, Sn, Ge, Ti, Fe, Zr, Zn, Ce, Bi, Sr, Mn, Li, Na, K und/oder einer protonierte Stickstoffbase zu den entsprechenden mono-hydroxyfunktionalisierten Dialkylphosphinsäuresalzen (III) dieser Metalle und/oder einer Stickstoffverbindung umsetzt.

3. Verfahren nach Anspruch 1 oder 2, **dadurch gekennzeichnet, dass** R¹, R², R³, R⁴, R⁵, R⁶, R⁷, R⁸ gleich oder verschieden sind und, unabhängig voneinander H, Methyl, Ethyl, n-Propyl, Isopropyl, n-Butyl, Isobutyl, tert. Butyl und/oder Phenyl bedeuten.

4. Verfahren nach einem oder mehreren der Ansprüche 1 bis 3, **dadurch gekennzeichnet, dass** X H, Ca, Mg, Al, Zn, Ti, Fe, Ce, Methyl, Ethyl, n-Propyl, Isopropyl, n-Butyl, Isobutyl, tert.-Butyl, Phenyl, Ethylenglykol, Propylglykol, Butylglykol, Pentylglykol, Hexylglykol, Allyl und/oder Glycerin bedeutet.

5. Verfahren nach einem oder mehreren der Ansprüche 1 bis 4, **dadurch gekennzeichnet, dass** es sich bei den Übergangsmetallen und/oder Übergangsmetallverbindungen um solche aus der siebten und achten Nebengruppe handelt.

6. Verfahren nach einem oder mehreren der Ansprüche 1 bis 5, **dadurch gekennzeichnet, dass** es sich bei den Übergangsmetallen und/oder Übergangsmetallverbindungen um Rhodium, Nickel, Palladium, Platin und/oder Ruthenium handelt.

7. Verfahren nach einem oder mehreren der Ansprüche 1 bis 6, **dadurch gekennzeichnet, dass** es sich bei dem Katalysator B um Wasserstoffperoxid, Natriumperoxid, Lithiumperoxid, Kaliumpersulfat, Natriumpersulfat, Ammoniumpersulfat, Natriumperoxodisulfat, Kaliumperoxoborat, Peressigsäure, Benzoylperoxid, Di-t-butylperoxid und/oder Peroxodischwefelsäure und/oder um Azodiisobutyronitril, 2,2'-Azobis(2-amidinopropan)-dihydrochlorid und/oder 2,2'-Azobis(N,N'-dimethylen-isobutyramidin)-dihydrochlorid handelt.

8. Verfahren nach einem oder mehreren der Ansprüche 1 bis 7, **dadurch gekennzeichnet, dass** es sich bei dem Katalysator C um Metalle, Metallhydride, Metallhydroxide und Metallalkoholate und Mineralsäuren, beispielsweise Schwefel-, Salpeter-, Salz,- Phosphorsäure oder Mischungen davon, handelt.

9. Verfahren nach einem oder mehreren der Ansprüche 1 bis 8, **dadurch gekennzeichnet, dass** es sich bei den Vinylestern einer Carbonsäure (V) ein Vinyl-, 1-Propenyl-, 1-Butenyl-acetat, -propionat, -butyrat, -pivalat, -benzoat, -cinnamat, -stearat und/oder -laurat handelt.

10. Verfahren nach einem oder mehreren der Ansprüche 1 bis 9, **dadurch gekennzeichnet, dass** es bei dem Alkohol der allgemeinen Formel M-OH um lineare oder verzweigte, gesättigte und ungesättigte, einwertige organische Alkohole mit einer Kohlenstoffkettenlänge von C₁-C₁₈ und es bei dem Alkohol der allgemeinen Formel M'-OH um lineare oder verzweigte, gesättigte und ungesättigte, mehrwertige organische Alkohole mit einer Kohlenstoffkettenlänge von C₁-C₁₈ handelt.

11. Herstellung von mono-hydroxyfunktionalisierten Dialkylphosphinsäuren, -estern und -salzen nach einem oder mehreren der Ansprüche 1 bis 10 und anschließende Verwendung dieser Produkte als Zwischenprodukt für weitere Synthesen, als Binder, als Vernetzer bzw. Beschleuniger beim Aushärten von Epoxyharzen, Polyurethanen und ungesättigten Polyesterharzen, als Polymerstabilisatoren, als Pflanzenschutzmittel, als Sequestrierungsmittel, als Mineralöl-Additiv, als Korrosionsschutzmittel, in Wasch- und Reinigungsmittelanwendungen.

12. Herstellung von mono-hydroxyfunktionalisierten Dialkylphosphinsäuren, -salzen und -estern nach einem oder mehreren der Ansprüche 1 bis 10 und anschließende Verwendung dieser Produkte als Flammschutzmittel, insbesondere als Flammschutzmittel für Klarlacke und Intumeszenzbeschichtungen, als Flammschutzmittel für Holz und andere cellulosehaltige Produkte, als reaktives und/oder nicht reaktives Flammschutzmittel für Polymere, zur Herstellung von flammgeschützten Polymerformmassen, zur Herstellung von flammgeschützten Polymerformkörpern und/oder zum flammhemmend Ausrüsten von Polyester und Cellulose-Rein- und Mischgeweben durch Imprägnierung.

## Claims

1. A method for producing monohydroxy-functionalized dialkylphosphinic acids, esters and salts, which comprises
a) reacting a phosphinic acid source (I) 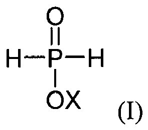 with olefins (IV) 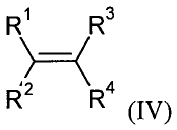 in the presence of a catalyst A to form an alkylphosphonous acid, salt or ester (II) 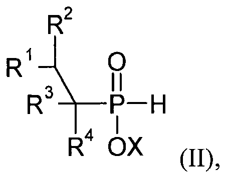
b) reacting the resulting alkyllphosphonous acid, salt or ester (II) with a vinyl ester of a carboxylic acid (V) 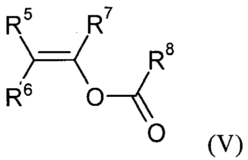 in the presence of a catalyst B to form the monofunctionalized dialkylphosphinic acid derivative (VI) 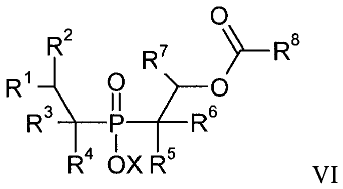 and
c) reacting the monofunctionalized dialkylphosphinic acid derivative (VI) in the presence of a catalyst C to form the monofunctionalized dialkylphosphinic acid derivative (III) 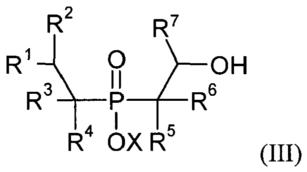 or esterifying the alkylphosphonous acid, salt or ester (II) obtained after step a) and/or the monofunctionalized dialkylphosphinic acid, salt or ester (VI) obtained after step b) and/or the monohydroxy-functionalized dialkylphosphinic acid, salt or ester (III) obtained after step c) and/or the particular resulting reaction solution thereof with an alkylene oxide or an alcohol M-OH and/or M'-OH, and subjecting the respectively resulting alkylphosphonous ester (II), monofunctionalized dialkylphosphinic ester (VI) and/or monohydroxyfunctionalized dialkylphosphinic ester (III) to the further reaction steps b) or c), where R¹, R², R³, R⁴, R⁵, R⁶, R⁷, R⁸ are identical or different and are each independently H, C₁-C₁₈-alkyl, C₆-C₁₈-aryl, C₆-C₁₈-aralkyl, C₆-C₁₈-alkylaryl, CN, CHO, OC(O)CH₂CN, CH(OH)C₂H₅, CH₂CH(OH)CH₃, 9-anthracene, 2-pyrrolidone, (CH₂)ₘOH, (CH₂)ₘNH₂, (CH₂)ₘNCS, (CH₂)ₘNC(S)NH₂, (CH₂)ₘSH, (CH₂)ₘS-2-thiazoline, (CH₂)ₘSiMe₃, C(O)R⁹, CH=CHR⁹ and/or CH=CH-C(O)R⁹ and where the groups C₆-C₁₈-aryl, C₆-C₁₈-aralkyl and C₆-C₁₈-alkylaryl may be substituted with C(O)CH₃, OH, CH₂OH, NH₂, NO₂, OCH₃, SH and/or OC(O)CH₃ and where R⁹ is C₁-C₈-alkyl or C₆-C₁₈-aryl and m is an integer from 0 to 10 and X is H, C₁-C₁₈-alkyl, C₆-C₁₈-aryl, C₆-C₁₈-aralkyl, C₆-C₁₈-alkylaryl, (CH₂)ₖOH, CH₂-CHOH-CH₂OH, (CH₂)ₖO(CH₂)ₖH, (CH₂)ₖ-CH(OH)-(CH₂)ₖH, (CH₂-CH₂O)ₖH, (CH₂-C[CH₃]HO)ₖH, (CH₂-C[CH₃]HO)ₖ(CH₂-CH₂O)ₖH, (CH₂-CH₂O)ₖ(CH₂-C[CH₃]HO)H, (CH₂-CH₂O)ₖ-alkyl, (CH₂-C[CH₃]HO)ₖ-alkyl, (CH₂-C[CH₃]HO)ₖ(CH₂-CH₂)ₖ-alkyl, (CH₂-CH₂O)ₖ(CH₂-C[CH₃]HO)O-alkyl, (CH₂)ₖ-CH=CH(CH₂)ₖH, (CH₂)ₖNH₂ and/or (CH₂)ₖN[(CH₂)ₖH]₂, where k is an integer from 0 to 10, and/or Mg, Ca, Al, Sb, Sn, Ge, Ti, Fe, Zr, Zn, Ce, Bi, Sr, Mn, Cu, Ni, Li, Na, K, H and/or a protonated nitrogen base and the catalyst A comprises transition metals and/or transition metal compounds and/or catalyst systems composed of a transition metal and/or transition metal compound and at least one ligand, and the catalyst B comprises peroxide-forming compounds and/or peroxo compounds and/or azo compounds and the catalyst C comprises an acid or a base.

2. The method according to claim 1 wherein the monohydroxy-functionalized dialkylphosphinic acid, its salt or ester (III) obtained after step c) is subsequently reacted in a step d) with metal compounds of Mg, Ca, Al, Sb, Sn, Ge, Ti, Fe, Zr, Zn, Ce, Bi, Sr, Mn, Li, Na, K and/or a protonated nitrogen base to form the corresponding monohydroxy-functionalized dialkylphosphinic acid salts (III) of these metals and/or of a nitrogen compound.

3. The method according to claim 1 or 2 wherein R¹, R², R³, R⁴, R⁵, R⁶, R⁷, R⁸ are identical or different and are each independently H, methyl, ethyl, n-propyl, isopropyl, n-butyl, isobutyl, tert-butyl and/or phenyl.

4. The method according to one or more of claims 1 to 3 wherein X is H, Ca, Mg, Al, Zn, Ti, Fe, Ce, methyl, ethyl, n-propyl, isopropyl, n-butyl, isobutyl, tert-butyl, phenyl, ethylene glycol, propyl glycol, butyl glycol, pentyl glycol, hexyl glycol, allyl and/or glycerol.

5. The method according to one or more of claims 1 to 4 wherein the transition metals and/or transition metal compounds comprise such from the seventh and eighth transition groups.

6. The method according to one or more of claims 1 to 5 wherein the transition metals and/or transition metal compounds comprise rhodium, nickel, palladium, platinum and/or ruthenium.

7. The method according to one or more of claims 1 to 6 wherein the catalyst B comprises hydrogen peroxide, sodium peroxide, lithium peroxide, potassium persulfate, sodium persulfate, ammonium persulfate, sodium peroxodisulfate, potassium peroxoborate, peracetic acid, benzoyl peroxide, di-t-butyl peroxide and/or peroxodisulfuric acid and/or comprises azodiisobutyronitrile, 2,2'-azobis(2-amidinopropane) dihydrochloride and/or 2,2'-azobis(N,N'-dimethyleneisobutyramidine) dihydrochloride.

8. The method according to one or more of claims 1 to 7 wherein the catalyst C comprises metals, metal hydrides, metal hydroxides and metal alkoxides and/or mineral acids, for example sulfuric acid, nitric acid, hydrochloric acid, phosphoric acid or mixtures thereof.

9. The method according to one or more of claims 1 to 8, wherein the vinyl esters of a carboxylic acid (V) comprise a vinyl, 1-propenyl, 1-butenyl acetate, propionate, butyrate, pivalate, benzoate, cinnamate, stearate and/or laurate.

10. The method according to one or more of claims 1 to 9 wherein the alcohol of the general formula M-OH comprises linear or branched, saturated and unsaturated, monohydric organic alcohols having a carbon chain length of C₁-C₁₈ and the alcohol of the general formula M'-OH comprises linear or branched, saturated and unsaturated polyhydric organic alcohols having a carbon chain length of C₁-C₁₈.

11. The preparation of monohydroxy-functionalized dialkylphosphinic acids, esters and salts according to one or more of claims 1 to 10 and the subsequent use of these products as an intermediate for further syntheses, as a binder, as a crosslinker or accelerant to cure epoxy resins, polyurethanes and unsaturated polyester resins, as polymer stabilizers, as crop protection agents, as a sequestrant, as a mineral oil additive, as a corrosion control agent, in washing and cleaning applications.

12. The preparation of monohydroxy-functionalized dialkylphosphinic acids, salts and esters according to one or more of claims 1 to 10 and the subsequent use of these products as a flame retardant, more particularly as a flame retardant for clearcoats and intumescent coatings, as a flame retardant for wood and other cellulosic products, as a reactive and/or nonreactive flame retardant for polymers, in the manufacture of flame-retardant polymeric molding materials, in the manufacture of flame-retardant polymeric molded articles and/or for flame-retardant finishing of polyester and cellulose straight and blend fabrics by impregnation.

## Revendications

1. Procédé de fabrication d'acides, d'esters et de sels dialkylphosphiniques mono-hydroxyfonctionnalisés, **caractérisé en ce que**
a) une source d'acide phosphinique (I) 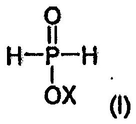 est mise en réaction avec des oléfines (IV) 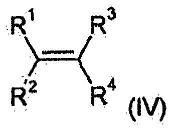 en présence d'un catalyseur A pour former un acide alkylphosphoneux, son sel ou son ester (II) 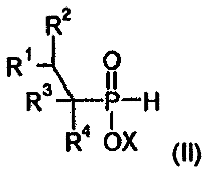
b) l'acide alkylphosphoneux ainsi formé, son sel ou son ester (II) est mis en réaction avec un ester vinylique d'un acide carboxylique (V) 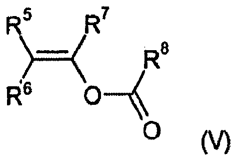 en présence d'un catalyseur B pour former le dérivé d'acide dialkylphosphinique mono-fonctionnalisé (VI), et 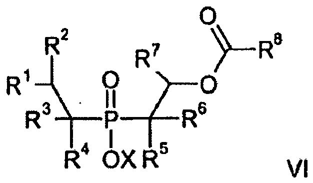
c) le dérivé d'acide dialkylphosphinique mono-fonctionnalisé (VI) est mis en réaction en présence d'un catalyseur C pour former le dérivé d'acide dialkylphosphinique mono-fonctionnalisé (III) 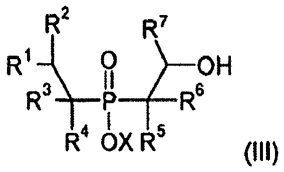 ou l'acide alkylphosphoneux obtenu à l'étape a), son sel ou son ester (II) et/ou l'acide dialkylphosphinique mono-fonctionnalisé obtenu à l'étape b), son sel ou son ester (IV) et/ou l'acide dialkylphosphinique monohydroxyfonctionnalisé obtenu à l'étape c), son sel ou son ester (III) et/ou leur solution réactionnelle résultante à chaque fois sont estérifiés avec un oxyde d'alkylène ou un alcool M-OH et/ou M'-OH, et l'ester d'acide alkylphosphoneux (II), l'ester d'acide dialkylphosphinique mono-fonctionnalisé (VI) et/ou l'ester d'acide dialkylphosphinique monohydroxyfonctionnalisé (III) respectivement formé est soumis aux étapes de réaction b) ou c) ultérieures, R¹, R², R³, R⁴, R⁵, R⁶, R⁷, R⁸ étant identiques ou différents et signifiant indépendamment les uns des autres H, alkyle en C₁-C₁₈, aryle en C₆-C₁₈, aralkyle en C₆-C₁₈, alkyl-aryle en C₆-C₁₈, CN, CHO, OC(O)CH₂CN, CH(OH)C₂H₅, CH₂CH(OH)CH₃, 9-anthracène, 2-pyrrolidone, (CH₂)ₘOH, (CH₂)ₘNH₂, (CH₂)ₘNCS, (CH₂)ₘNC(S)NH_{2,} (CH₂)ₘSH, (CH₂)ₘS-2-thiazoline, (CH₂)ₘSiMe₃, C(O)R⁹, CH=CH-R⁹ et/ou CH=CH-C(O)R⁹, les groupes aryle en C₆-C₁₈,aralkyle en C₆-C₁₈ et alkyl-aryle en C₆-C₁₈ pouvant être substitués avec C(O)CH₃, OH, CH₂OH, NH₂, NO₂, OCH₃, SH et/ou OC(O)CH₃, R⁹ représentant alkyle en C₁-C₈ ou aryle en C₆-C₁₈ et m signifiant un nombre entier de 0 à 10, et X représentant H, alkyle en C₁-C₁₈, aryle en C₆-C₁₈, aralkyle en C₆-C₁₈, alkyl-aryle en C₆-C₁₈,(CH₂)ₖOH, CH₂-CHOH-CH₂OH, (CH2)ₖO (CH₂)ₖH, (CH₂)ₖ-CH(OH)-(CH₂)ₖH, (CH₂-CH₂O)ₖH, (CH₂-C[CH₃]HO)ₖH, (CH₂-C[CH₃]HO)ₖ(CH₂-CH₂O)ₖH, (CH₂-CH₂O)ₖ(CH₂-C[CH₃]HO)H, (CH₂-CH₂O)k-alkyle, (CH₂-C[CH₃]HO)k-alkyle, (CH₂-C[CH₃]HO)ₖ(CH₂-CH₂O)ₖ-alkyle, (CH₂-CH₂O)ₖ(CH₂-C[CH₃]HO)O-alkyle, (CH₂)ₖ-CH=CH (CH₂)ₖH, (CH₂)ₖNH₂ et/ou (CH₂)ₖN[(CH₂)ₖH]₂, k représentant un nombre entier de 0 à 10 et/ou Mg, Ca, Al, Sb, Sn, Ge, Ti, Fe, Zr, Zn, Ce, Bi, Sr, Mn, Cu, Ni, Li, Na, K, H et/ou une base azotée protonée, et le catalyseur A consistant en des métaux de transition et/ou des composés de métaux de transition et/ou des systèmes catalytiques composés d'un métal de transition et/ou d'un composé de métal de transition et d'au moins un ligand, et le catalyseur B consistant en des composés formant des peroxydes et/ou des composés peroxo et/ou des composés azo, et le catalyseur C consistant en un acide ou une base.

2. Composé selon la revendication 1, **caractérisé en ce que** l'acide dialkylphosphinique mono-hydroxyfonctionnalisé obtenu à l'étape c), son sel ou son ester (III) est ensuite mis en réaction lors d'une étape d) avec des composés métalliques de Mg, Ca, Al, Sb, Sn, Ge, Ti, Fe, Zr, Zn, Ce, Bi, Sr, Mn, Li, Na, K et/ou d'une base azotée protonée pour former les sels d'acide dialkylphosphinique mono-hydroxyfonctionnalisés (III) correspondants de ces métaux et/ou d'un composé azoté.

3. Composé selon la revendication 1 ou 2, **caractérisé en ce que** R¹, R², R³, R⁴, R⁵, R⁶, R⁷, R⁸ sont identiques ou différents et signifient, indépendamment les uns des autres, H, méthyle, éthyle, n-propyle, isopropyle, n-butyle, isobutyle, tert.-butyle et/ou phényle.

4. Procédé selon une ou plusieurs des revendications 1 à 3, **caractérisé en ce que** X signifie H, Ca, Mg, Al, Zn, Ti, Fe, Ce, méthyle, éthyle, n-propyle, isopropyle, n-butyle, isobutyle, tert.-butyle, phényle, éthylène glycol, propylglycol, butylglycol, pentylglycol, hexylglycol, allyle et/ou glycérine.

5. Procédé selon une ou plusieurs des revendications 1 à 4, **caractérisé en ce que** les métaux de transition et/ou les composés de métaux de transition sont du septième et huitième groupe de transition.

6. Procédé selon une ou plusieurs des revendications 1 à 5, **caractérisé en ce que** les métaux de transition et/ou les composés de métaux de transition sont du rhodium, du nickel, du palladium, du platine et/ou du ruthénium.

7. Procédé selon une ou plusieurs des revendications 1 à 6, **caractérisé en ce que** le catalyseur B consiste en du peroxyde d'hydrogène, du peroxyde de sodium, du peroxyde de lithium, du persulfate de potassium, du persulfate de sodium, du persulfate d'ammonium, du peroxodisulfate de sodium, du peroxoborate de potassium, de l'acide peracétique, du peroxyde de benzoyle, du peroxyde de di-t-butyle et/ou de l'acide peroxodisulfurique et/ou de l'azodiisobutyronitrile, du dichlorhydrate de 2,2'-azobis(2-amidinopropane) et/ou du dichlorhydrate de 2,2'-azobis(N,N'-diméthylène-isobutyramidine).

8. Procédé selon une ou plusieurs des revendications 1 à 7, **caractérisé en ce que** le catalyseur C consiste en des métaux, des hydrures de métaux, des hydroxydes de métaux et des alcoolates de métaux et des acides minéraux, par exemple l'acide sulfurique, nitrique, chlorhydrique, phosphorique ou leurs mélanges.

9. Procédé selon une ou plusieurs des revendications 1 à 8, **caractérisé en ce que** les esters vinyliques d'un acide carboxylique (V) consistent en un acétate, propionate, butyrate, pivalate, benzoate, cinnamate, stéarate et/ou laurate de vinyle, de 1-propényle, de 1-butényle.

10. Procédé selon une ou plusieurs des revendications 1 à 9, **caractérisé en ce que** l'alcool de formule générale M-OH consiste en des alcools organiques monovalents linéaires ou ramifiés, saturés ou insaturés, d'une longueur de chaîne carbonée de C₁-C₁₈ et l'alcool de formule générale M'-OH consiste en des alcools organiques polyvalents linéaires ou ramifiés, saturés ou insaturés, d'une longueur de chaîne carbonée de C₁-C₁₈.

11. Fabrication d'acides, d'esters et de sels dialkylphosphiniques mono-hydroxyfonctionnalisés selon une ou plusieurs des revendications 1 à 10, puis utilisation de ces produits en tant que produit intermédiaire pour des synthèses ultérieures, en tant que liant, en tant qu'agent de réticulation ou accélérateur lors du durcissement de résines époxy, de polyuréthanes et de résines de polyester insaturées, en tant que stabilisateurs polymères, en tant qu'agent phytoprotecteur, en tant que séquestrant, en tant qu'additif pour huile minérale, en tant qu'agent anticorrosion, dans des applications d'agents de lavage et de nettoyage.

12. Fabrication d'acides, de sels et d'esters dialkylphosphiniques mono-hydroxyfonctionnalisés selon une ou plusieurs des revendications 1 à 10, puis utilisation de ces produits en tant qu'agent ignifuge, notamment en tant qu'agent ignifuge pour laques transparentes et revêtements intumescents, en tant qu'agent ignifuge pour bois et autres produits cellulosiques, en tant qu'agent ignifuge réactif et/ou non réactif pour polymères, pour la fabrication de matériaux de moulage polymères ignifugés, pour la fabrication de corps moulés polymères ignifugés et/ou pour l'ignifugation de polyesters et de tissus cellulosiques purs et mixtes par imprégnation.
